(19)

**Europäisches Patentamt**
**European Patent Office**
**Office européen des brevets**

(11) **EP 4 752 970 A1**

(12) **EUROPEAN PATENT APPLICATION**

(43) Date of publication:
**03.06.2026 Bulletin 2026/23**

(21) Application number: **25219369.3**

(22) Date of filing: **28.11.2025**

(51) International Patent Classification (IPC):
$H01M\ 4/36^{(2006.01)}$    $H01M\ 4/134^{(2010.01)}$
$H01M\ 4/38^{(2006.01)}$    $H01M\ 4/587^{(2010.01)}$
$H01M\ 4/62^{(2006.01)}$    $H01M\ 4/133^{(2010.01)}$

(52) Cooperative Patent Classification (CPC):
**H01M 4/134; H01M 4/133; H01M 4/364;**
**H01M 4/386; H01M 4/587; H01M 4/622**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **29.11.2024  KR 20240175703**
            **29.11.2024  KR 20240175702**
            **29.11.2024  KR 20240175709**

(71) Applicant: **SAMSUNG SDI CO., LTD.**
**Yongin-si, Gyeonggi-do 17084 (KR)**

(72) Inventors:
• **Yu, So Jeong**
  **Suwon-si, Gyeonggi-do 16678 (KR)**

• **Oh, Se Young**
  **Suwon-si, Gyeonggi-do 16678 (KR)**
• **Cha, Yu Rim**
  **Suwon-si, Gyeonggi-do 16678 (KR)**
• **Cho, Hang In**
  **Suwon-si, Gyeonggi-do 16678 (KR)**
• **Shin, Ga In**
  **Suwon-si, Gyeonggi-do 16678 (KR)**
• **Moon, Dong Min**
  **Suwon-si, Gyeonggi-do 16678 (KR)**
• **Kim, Min Kyeong**
  **Suwon-si, Gyeonggi-do 16678 (KR)**

(74) Representative: **Meissner Bolte Partnerschaft mbB**
**Patentanwälte Rechtsanwälte**
**Postfach 86 06 24**
**81633 München (DE)**

(54) **DRY NEGATIVE ELECTRODE PLATE FOR RECHARGEABLE LITHIUM BATTERY AND RECHARGEABLE LITHIUM BATTERY INCLUDING THE SAME**

(57)    A dry negative electrode plate for a rechargeable lithium battery and a rechargeable lithium battery including the same are disclosed. A dry negative electrode plate for a rechargeable lithium battery includes a negative electrode active material and a binder, and the negative electrode active material includes a mixture of a first negative electrode active material, a second negative electrode active material, and a third negative electrode active material, the first negative electrode active material includes natural graphite including secondary particles into which primary particles are arranged; and a coating layer including amorphous carbon surrounding the secondary particles, the first negative electrode active material has an orientation degree of 90 or less and a d002 of 3.356 Å to 3.360 Å, the second negative electrode active material includes artificial graphite, and the binder includes polytetrafluoroethylene, polyvinylidene fluoride, a polyolefin, or a mixture thereof.

FIG. 1.

# EP 4 752 970 A1

## Description

### CROSS-REFERENCE TO RELATED APPLICATIONS

The present application claims priority to and the benefit of Korean Patent Application No. 10-2024-0175703, filed on November 29, 2024 in the Korean Intellectual Property Office, Korean Patent Application No. 10-2024-0175702, filed on November 29, 2024 in the Korean Intellectual Property Office, and Korean Patent Application No. 10-2024-0175709, filed on November 29, 2024 in the Korean Intellectual Property Office.

### BACKGROUND

#### 1. Field

The present invention relates to a dry negative electrode plate for a rechargeable lithium battery and a rechargeable lithium battery including the same.

#### 2. Discussion of Related Art

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of the intercalation and deintercalation of lithium ions and produces electric energy by oxidation and reduction reactions when the lithium ions are intercalated into and deintercalated from the positive electrode and the negative electrode.

### SUMMARY

According to an aspect of the present invention, a dry negative electrode plate for a rechargeable lithium battery exhibiting high energy density, a boost charging effect, and a long lifespan is provided.

According to another aspect of the present invention, a rechargeable lithium battery including the dry negative electrode plate is provided.

According to the present invention, a dry negative electrode plate for a rechargeable lithium battery includes a negative electrode active material and a binder, wherein the negative electrode active material includes a mixture of a first negative electrode active material, a second negative electrode active material, and a third negative electrode active material, wherein the first negative electrode active material includes natural graphite including secondary particles in which primary particles are arranged and a coating layer surrounding the secondary particles and including amorphous carbon, wherein the first negative electrode active material has an orientation degree of 90 or less and a d002 of 3.356 Å to 3.360 Å, wherein the second negative electrode active material includes graphite, wherein the third negative electrode active material includes one or more of the following: (i) a negative electrode active material including a core including silicon nanoparticles and amorphous carbon; and an amorphous carbon coating layer surrounding the core and including amorphous carbon, (ii) a negative electrode active material including a composite of silicon and crystalline carbon; and an amorphous carbon coating layer located on a surface of the composite and including amorphous carbon, and (iii) a negative electrode active material including silicon nanoparticles and an amorphous carbon coating layer located on surfaces of the silicon nanoparticles and having a sphericity of 0.9 to 1.0; and wherein the binder includes polytetrafluoroethylene, polyvinylidene fluoride, a polyolefin, or a mixture thereof.

According to the present invention, a rechargeable lithium battery includes the above-described dry negative electrode plate for a rechargeable lithium battery and a positive electrode.

### BRIEF DESCRIPTION OF THE DRAWINGS

The above and other aspects, objects, features, and advantages of the present invention will become more apparent to those of ordinary skill in the art by describing some embodiments thereof in further detail with reference to the accompanying drawings, in which:

FIG. 1 is a conceptual diagram of a first negative electrode active material according to an embodiment;
FIG. 2 is a conceptual diagram of (i) a negative electrode active material of a third negative electrode active material according to an embodiment;

FIG. 3 is a conceptual diagram of an interparticle distance in (i) the negative electrode active material of the third negative electrode active material;

FIG. 4 is a conceptual diagram of (ii) a negative electrode active material of the third negative electrode active material according to an embodiment; and

FIGS. 5 to 8 are views schematically showing a rechargeable lithium battery according to some embodiments.

## DETAILED DESCRIPTION

Herein, some embodiments of the present invention will be described in further detail. However, the embodiments are presented as examples, and the present invention is not limited thereto, and the present invention is to be defined by the scope of the claims.

Unless otherwise specified herein, when a part, such as a layer, a film, an area, a plate, etc., is said to be "on" another part, it includes not only a case in which the part is directly on the other part, but also a case in which one or more parts are present therebetween.

Unless otherwise specified herein, the singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle diameter. In addition, the particle size refers to the average size diameter (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size (D50) value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

When the particle is spherical, the size may mean a diameter.

A dry negative electrode plate for a rechargeable lithium battery according to the invention may provide high energy density, a boost charging effect, and a long lifespan.

The dry negative electrode plate for a rechargeable lithium battery according to the invention includes a negative electrode active material and a binder, wherein the negative electrode active material includes a mixture of a first negative electrode active material, a second negative electrode active material and a third negative electrode active material, the first negative electrode active material includes natural graphite including secondary particles into which primary particles are assembled, or arranged, and a coating layer including amorphous carbon surrounding the secondary particles, the first negative electrode active material has an orientation degree of 90 or less and a d002 of 3.356 Å to 3.360 Å, the second negative electrode active material includes graphite, the third negative electrode active material includes one or more of the following: (i) a negative electrode active material including a core including silicon nanoparticles and amorphous carbon; and an amorphous carbon coating layer including amorphous carbon, (ii) a negative electrode active material including a composite of silicon and crystalline carbon; and an amorphous carbon coating layer located on a surface of the composite and including amorphous carbon, and (iii) a negative electrode active material including silicon nanoparticles and an amorphous carbon coating layer located on surfaces of the silicon nanoparticles and having a sphericity of 0.9 to 1.0; and the binder includes polytetrafluoroethylene, polyvinylidene fluoride, a polyolefin, or a mixture thereof.

The dry negative electrode plate for a rechargeable lithium battery includes the mixture as a negative electrode active material, and thus may provide a high capacity retention rate, and may also provide high energy density, a boost charging effect, and a lifespan improvement effect.

In an embodiment, the mixture may be included in an amount of 95% by weight or more, for example 95 to 100% by weight, 99 to 100% by weight, or 100% by weight, based on the total negative electrode active materials of the negative electrode plate.

In an embodiment, the negative electrode active material, for example, the mixture, may be included in an amount of 90% by weight to 99% by weight in the negative electrode plate. Within the above range, a capacity improvement effect may be achieved.

If the first negative electrode active material is not present in the mixture, the low plate density makes it difficult to realize a cell having high energy density and may reduce the boost charging effect.

If the second negative electrode active material is not present in the mixture, the long lifespan effect may be reduced in a high-temperature environment.

If the third negative electrode active material is not present in the mixture, the increase in capacity per volume may be reduced.

In an embodiment, the first negative electrode active material, the second negative electrode active material, and the third negative electrode active material in the mixture may be included in amounts of 20 to 75% by weight (wt%), 20 to 75% by weight, and 1 to 20% by weight, respectively. Within the above range, it may be easy to provide a boost charging effect and improve a boost charging lifespan.

In an embodiment, the first negative electrode active material may be included in the mixture in an amount of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65% by weight, or 20 to 60% by weight, the second negative electrode active material may be included in an amount of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65% by weight, or 20 to 60% by weight, and the third negative electrode active material may be included in an amount of 1, 2, 3, 4, 5, 6, 7, 8, 9, 10, 11, 12, 13, 14, 15, 16, 17, 18, 19, or 20 wt%, and, in an embodiment, 1 to 15% by weight, 1 to 10% by weight, or 5 to 7% by weight. Within the above range, the effect of providing a boost charging effect and improving a boost charging lifespan may be further improved.

In an embodiment, the content of the third negative electrode active material in the mixture is in the range of 1 to 15% by weight, for example, 1, 2, 3, 4, 5, 6, 7, 8, 9, 10, 11, 12, 13, 14, or 15 wt%, the sum of the contents of the first negative electrode active material and the second negative electrode active material is in the range of 85 to 99% by weight, for example, 85, 86, 87, 88, 89, 90, 91, 92, 93, 94, 95, 96, 97, 98, or 99 wt%, and, in an embodiment, 86 to 99 wt%, or 90 to 99 wt%. In this case, the weight ratio of the first negative electrode active material to the second negative electrode active material based on a total of 100 parts by weight of the first negative electrode active material and the second negative electrode active material may be in a range from 10:90 to 90:10, for example, 25:75 to 75:25, 40:60 to 60:40, or 50:50. Within the above range, there may be a boost charging effect and a boost charging lifespan improvement effect may be achieved.

In an embodiment, the third negative electrode active material may be included with a specific capacity of 500 mAh/g or less.

In an embodiment, the negative electrode plate may have a density of 1.3 g/cc to 1.7 g/cc, for example, 1.3 g/cc to 1.68 g/cc. Within the above range, high energy density and easy boost charging may be achieved.

Herein, each of the components of the negative electrode active material will be described in further detail.

**(1) First negative electrode active material**

A first negative electrode active material includes natural graphite including secondary particles into which primary particles are assembled, or arranged; and a coating layer surrounding the secondary particles and including amorphous carbon, wherein the first negative electrode active material has an orientation degree of 90 or less and a d002 of 3.356 Å to 3.360 Å.

In the present specification, the term "orientation degree" may refer to the ratio of the diffraction peak intensity I(002) of the (002) plane to the diffraction peak intensity I(110) of the (110) plane, as measured by an X-ray diffraction analysis method using $Cu\alpha$ rays.

In the present specification, the term "d002" may refer to the interplanar spacing of the (002) plane of the first negative electrode active material, as measured by an X-ray diffraction analysis method using $Cu\alpha$ rays.

In general, natural graphite has advantages as a negative electrode active material for batteries, but may have poor charging characteristics due to a high resistance thereof. Also, due to the large number of internal pores in natural graphite, side reactions may adversely affect the long cycle life and expansion rate.

The first negative electrode active material may be manufactured by significantly reducing the average particle diameter of secondary particles of natural graphite to a small particle form to provide low resistance, and by calcining the secondary particles at a temperature described below to offset the decrease in efficiency due to the increased specific surface area of the secondary particles, and, thus, the specific surface area is reduced and high efficiency is provided at the same time.

In this regard, the first negative electrode active material includes the natural graphite, the amorphous carbon, and the coating layer, and satisfies the above orientation degree and d002. Therefore, the first negative electrode active material may improve battery capacity and significantly increase the charge C-rate, thereby enhancing the boost charging performance of the rechargeable lithium battery. Although the first negative electrode active material includes the natural graphite, the first negative electrode active material may significantly reduce resistance, and may provide high energy density, an effect of suppressing side reactions with the electrolyte, and a lifespan improvement effect.

The lower the orientation degree, the more the edge planes of the natural graphite are oriented in a random direction, which results in an increase in random orientation of the first negative electrode active material. Accordingly, this facilitates the intercalation and deintercalation of lithium ions into the secondary particles of natural graphite, thereby improving the capacity characteristics of a rechargeable lithium battery. In an embodiment, for example, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80. In a preferred embodiment, the first negative electrode active material has an orientation degree in the range from 10 to 80, 20 to 80, 30 to 80, 40 to 80, or 50 to 80. The above orientation degree may be implemented by controlling the average particle diameter D50 of the secondary particles and the major axis length of the primary particles. In the first negative electrode active material, the average particle diameter D50 of the secondary particles is significantly reduced to improve the high resistance of natural graphite.

In an embodiment, as described below, the average particle diameter D50 of the secondary particles in the first negative electrode active material is significantly smaller than the major axis length of the primary particles. In an embodiment, the secondary particles may be manufactured by crumpling the primary particles. In an embodiment, the first negative electrode active material includes amorphous carbon, and may have a high graphitization degree when the first negative electrode active material is manufactured by heat treatment at 2,500°C or higher as described below. The high graphitization degree may contribute to improving the capacity of the negative electrode active material, and may prevent or substantially prevent a decrease in efficiency due to a decrease in the average particle diameter and an increase in the specific surface area of the secondary particles. In an embodiment, the d002 of the first negative electrode active material is 3.356 Å to 3.360 Å. Within the above range, the decrease in battery efficiency due to the increase in the specific surface area of the first negative electrode active material including secondary particles having a relatively small average particle diameter D50 may be offset, thereby providing high capacity. For example, the d002 may be 3.356, 3.3561, 3.3562, 3.3563, 3.3564, 3.3565, 3.3566, 3.3567, 3.3568, 3.3569, 3.357, 3.3571, 3.3572, 3.3573, 3.3574, 3.3575, 3.3576, 3.3577, 3.3578, 3.3579, 3.358, 3.3581, 3.3582, 3.3583, 3.3584, 3.3585, 3.3586, 3.3587, 3.3588, 3.3589, 3.359, 3.3591, 3.3592, 3.3593, 3.3594, 3.3595, 3.3596, 3.3597, 3.3598, 3.3599, or 3.360 Å.

According to an embodiment, the first negative electrode active material may have an Hg cumulative pore volume of 0.01 to 0.06 mL/g, for example, 0.01, 0.02, 0.03, 0.04, 0.05, or 0.06 mL/g, and, in an embodiment, 0.02 to 0.06 mL/g, or 0.03 to 0.06 mL/g. Within the above range, significantly higher negative electrode active material efficiency may be achieved due to the small pores, i.e., empty spaces, inside the first negative electrode active material and the appropriate content of amorphous carbon inside the negative electrode active material. Also, the internal area of the first negative electrode active material that reacts with the electrolyte is not excessive and may maintain a level of density that allows the electrolyte to be well impregnated, thereby maintaining an appropriate lifespan without excessive side reactions. Although the negative electrode active material includes small-particle natural graphite, the Hg cumulative pore volume may be a characteristic of the negative electrode active material manufactured by a manufacturing method described below to reduce the specific surface area.

According to an embodiment, the first negative electrode active material may have a sphericity S of 0.85 or more according to the following Equation 1:

$$\text{Equation 1}$$

$$\text{Sphericity } S = 4\pi \times A/B^2,$$

wherein A represents the area of the first negative electrode active material, and B represents the perimeter of the shape of the first negative electrode active material.

In an embodiment, B may be the actual perimeter of the shape of the first negative electrode active material.

The sphericity of the first negative electrode active material may be a value obtained by projecting a three-dimensional particle onto a two-dimensional plane. For example, the sphericity may be a ratio of the boundary of the actual particle shape and the boundary of a circle having the same area.

In Equation 1 above, the area A indicates the area of a circle with a circumference, which is the same as the actual perimeter B of particles that has been obtained through a scanning electron microscope (SEM) image of the electrode cross-section is obtained using a controlled pressure scanning electron microscope (CP-SEM SEM) and calculating the actual perimeter of the particle from the cross-section image using an Image J program. In an embodiment, the actual perimeter may refer not only to the perimeter when the particle has a perfectly spherical shape, but also the length obtained along the perimeter even if the particle is not perfectly spherical and has uneven regions.

In an embodiment, the first negative electrode active electrode material may have a sphericity of 0.85, 0.86, 0.87, 0.88, 0.89, 0.90, 0.91, 0.92, 0.93, 0.94, 0.95, 0.96, 0.97, 0.98, 0.99, or 1.0, and, in an embodiment, 0.90 to 1.0, 0.90 to 0.98, or 0.90 to 0.95. When the sphericity falls within the above range, the expansion rate during charging and discharging may be more effectively suppressed.

In an embodiment, the first negative electrode active material may have a pellet density of 1.60 to 1.80 g/cc. Within the above range, the internal pores of the first negative electrode active material and side reactions with the electrolyte may be reduced, thereby improving lifespan characteristics. For example, the pellet density may be in a range from 1.70 to 1.80 g/cc. For example, the pellet density may be 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, or 1.80 g/cc, and, in an embodiment, 1.70 to 1.80 g/cc.

In an embodiment, the first negative electrode active material may have a tap density of 0.75 to 1.20 g/cc, for example, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, or 1.20 g/cc, and, in an embodiment, 0.75 to 1.0 g/cc or 0.95 to 1.20 g/cc. Within the above range, the internal pores of the first negative electrode active material and side reactions with the electrolyte may be reduced, thereby improving lifespan characteristics. The tap density may be obtained by calculating an average value by performing a process of applying a pressure of 108 N three times using a GeoPyc 1360 Pycnometer (Micromeritics) having a conversion factor of 0.2907 cm$^3$/mm and a chamber with a diameter of 19.1 mm.

In an embodiment, the first negative electrode active material may have a specific surface area of 10 m$^2$/g or less, for example, 1, 1.5, 2, 2.5, 3, 3.5, 4, 4.5, 5, 5.5, 6, 6.5, 7, 7.5, 8, 8.5, 9, 9.5, or 10 m$^2$/g, and, in an embodiment, 1 to 10 m$^2$/g. Within the above range, the internal pores of the first negative electrode active material and side reactions with the electrolyte may be reduced, thereby improving lifespan characteristics. The specific surface area may be a BET specific surface area. The BET specific surface area may be measured using a MOUNTECH Macsorb HM Model-1208.

In an embodiment, the internal porosity of the first negative electrode active material may be 2% or less, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2%, and, in an embodiment, 1.8% or less, 1.5% or less, 1.0 to 1.5%, or 1.0 to 1.3%. Within the above range, side reactions between the first negative electrode active material and the electrolyte may be suppressed, thereby improving the lifespan of the rechargeable lithium battery. Among the porosity, the total pore volume and mesopore volume may be quantitatively measured using a Barrett-Joyner-Halenda (BJH) analysis device.

Herein, the composition of the first negative electrode active material will be described in further detail.

The first negative electrode active material includes natural graphite including secondary particles into which primary particles are assembled; and a coating layer surrounding the secondary particles and including amorphous carbon.

The natural graphite may be flaky, or flake-like (e.g., needle-shaped, scale-shaped, or flake-type) natural graphite.

In an embodiment, the primary particles may have a major axis length of 10 to 200 μm, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200 μm, and, in an embodiment, 10 to 100 μm, 30 to 60 μm, or 20 to 50 μm. Within the above range, assembly into secondary particles may be facilitated, and the ratio described below may be easily achieved.

Here, the "major axis length" refers to the length of the longest axis between opposing sides when the primary particles are plate-shaped.

In an embodiment, the primary particles may be in a plate-shaped, but the present invention is not limited thereto.

In an embodiment, the secondary particles may have an average particle diameter D50 of 30 μm or less. Within the above range, the ratio described below may be easily achieved. For example, the secondary particles may have an average particle diameter D50 of 5 μm or more and 10 μm or less, for example 5, 6, 7, 8, 9, or 10 μm, and, in an embodiment, 6 μm or more and 8 μm or less. Within the above range, the above orientation degree and sphericity may be easily achieved.

The secondary particles may be spherical, but the present invention is not limited thereto.

In an embodiment, the ratio of the major axis length of the primary particles to the average particle diameter D50 of the secondary particles may be greater than 2 and less than or equal to 10. Within the above range, the resistance of the active material may not increase and boost charging performance may not decrease. For example, the ratio may be 2.1, 2.5, 3, 3.5, 4, 4.5, 5, 5.5, 6, 6.5, 7, 7.5, 8, 8.5, 9, 9.5, or 10, and, in an embodiment, 3 to 6, 4 to 6, or 5 to 6. Within the above range, the above orientation degree and sphericity may be easily achieved.

The amorphous carbon is contained in the coating layer surrounding the surfaces of the secondary particles. The amorphous carbon may reduce the internal porosity of the negative electrode active material and suppress side reactions between the negative electrode active material and the electrolyte, thereby improving charging/discharging C-rate characteristics.

In an embodiment, the coating layer including the amorphous carbon may have a thickness of 5 to 50 nm, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 nm, and, in an embodiment, 10 to 50 nm, or 20 to 50 nm. Within the above range, side reactions with the electrolyte may be suppressed and charging/discharging C-rate characteristics may be improved.

The amorphous carbon may be a mixture of one or more selected from soft carbon, hard carbon, mesophase pitch carbide, and calcined coke.

The amorphous carbon may be further present on the surfaces of the primary particles.

In an embodiment, based on a total of 100 parts by weight of natural graphite and amorphous carbon in the first negative electrode active material, the natural graphite and the amorphous carbon may be included in a weight ratio of 90:10 to 75:25, for example, 90:10 to 80:20, 90:10 to 85:15, or 90:10 to 88:12. Within the above range, side reactions with the electrolyte may be effectively suppressed and charging/discharging C-rate characteristics may be improved.

Herein, a method of preparing the first negative electrode active material will be described.

(1) Primary particles having the above major axis length are obtained by grinding a natural graphite raw material having an average particle diameter D50 of 120 $\mu$m or more. In an embodiment, the natural graphite raw material may be ground by applying an air jet milling method. The air jet milling may include grinding the natural graphite raw material under conditions of 5 to 20 kg/cm$^2$ at room temperature.

(2) The primary particles are assembled into secondary particles using a spheroidizing device.

The assembling is a process that aims to achieve a sphericity of 0.85 or higher, and may be performed using a high-intensity mixer equipped with a highspeed rotating rotor and a stator. In the spheroidization process, the average particle diameter D50 of the secondary particles may be controlled by varying the pressure, shear rate, and the like.

(3) The produced secondary particles are mixed with an amorphous carbon precursor.

The amorphous carbon precursor is not particularly limited as long as it is a material that forms a carbide. For example, the precursor may include one or more of a phenol resin, a furan resin, an epoxy resin, a polyacrylonitrile resin, a polyamide resin, a polyimide resin, a polyamideimide resin, a synthetic pitch, a petroleum pitch, a coal pitch, and tar.

In the mixing, the natural graphite and amorphous carbon in the final product, i.e., the negative electrode active material, may be added so that the natural graphite and amorphous carbon can be present in the above-described weight ratio.

(4) The first negative electrode active material is obtained by calcining and heat-treating the mixture obtained by the mixing.

In an embodiment, the heat treatment may be performed at 2,500°C or higher, for example, 2,500°C to 3,500°C, for example, 2,500°C to 3,000°C. Within the above range, the negative electrode active material including the secondary particles satisfying the above-described ratio may be heat-treated to easily the above orientation degree, d002 and sphericity.

The heat treatment may be maintained for 1 to 5 hours, for example, 1 to 4 hours, 1 to 3 hours, or 2 to 3 hours.

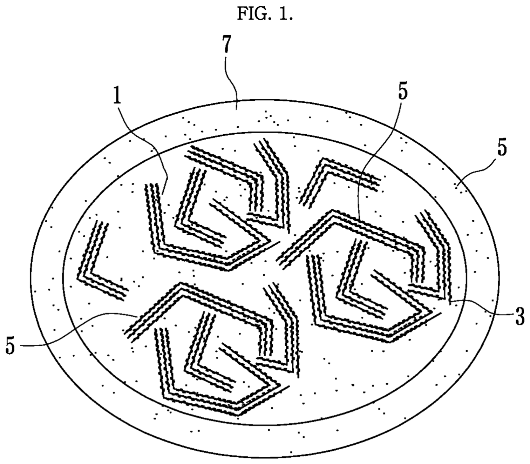

FIG. 1 is a conceptual diagram of a first negative electrode active material according to an embodiment.

Referring to FIG. 1, the first negative electrode active material includes natural graphite including secondary particles 3 into which a plurality of primary particles 1 are assembled, or arranged; amorphous carbon 5 present on surfaces of the primary particles 1; and a coating layer 7 surrounding the secondary particles 3 and including amorphous carbon 5. Referring to FIG. 1, as the secondary particles 3 are assembled by spherically forming the primary particles 1 in a bent shape, natural graphite has a smaller size and a dense internal structure, such that the internal pores may be minimized or reduced, side reactions with the electrolyte may be reduced, and the cycle lifespan may be improved.

**(2) Second negative electrode active material**

The second negative electrode active material may be graphite. In an embodiment, the second negative electrode active material may be at least one of natural graphite and artificial graphite. For example, the second negative electrode active material may be natural graphite.

In an embodiment, the artificial graphite may have an average particle diameter D50 of 10 $\mu$m to 20 $\mu$m, for example, 13 $\mu$m to 18 $\mu$m, or 15 $\mu$m to 20 $\mu$m. Within the above range, the specific surface area may not increase significantly, thereby suppressing an increase in side reactions with the electrolyte and preventing or substantially preventing boost charging performance from deteriorating.

In an embodiment, the artificial graphite may have a maximum particle diameter of 30 to 40 $\mu$m.

In an embodiment, the artificial graphite may have a pellet density lower than that of the first negative electrode active material, for example, a pellet density of 1.1 to 1.6 g/cc or 1.1 to 1.5 g/cc.

In an embodiment, the artificial graphite may have a tap density lower than that of the first negative electrode active material, for example, a tap density of 0.5 to 1.0 g/cc or 0.5 to 0.9 g/cc.

In an embodiment, the artificial graphite may have a specific surface area of 10 m$^2$/g or less, for example, 1 to 10 m$^2$/g. The specific surface area may be a BET specific surface area.

In an embodiment, the artificial graphite may have an orientation degree of 90 or more, for example, 90 to 100, or greater than 90 and 100 or less. The orientation degree may be measured using the above-described method.

The artificial graphite may have, but is not limited to, a spherical shape.

The artificial graphite may be one or more of single particles, primary particles, secondary particles into which the primary particles are assembled, and tertiary particles into which the secondary particles are assembled.

In an embodiment, the secondary particles into which the primary particles are assembled in the artificial graphite may further include a coating layer including amorphous carbon on the surface thereof.

## (3) Third negative electrode active material

In an embodiment, a third negative electrode active material is a silicon-based negative electrode active material, and includes one or more of the following:

(i) a negative electrode active material including a core including silicon nanoparticles and amorphous carbon; and an amorphous carbon coating layer surrounding the core and including amorphous carbon,

(ii) a negative electrode active material including a composite of silicon and crystalline carbon; and an amorphous carbon coating layer formed or located on a surface of the composite and including amorphous carbon, and

(iii) a negative electrode active material including silicon nanoparticles and an amorphous carbon coating layer formed or located on surfaces of the silicon nanoparticles and having a sphericity of 0.9 to 1.0.

## (i) Negative electrode active material

The negative electrode active material (i) includes a core including silicon nanoparticles and amorphous carbon; and an amorphous carbon coating layer surrounding the core and including amorphous carbon.

In an embodiment, the negative electrode active material may be a binary negative electrode active material including silicon and amorphous carbon.

In an embodiment, in the negative electrode active material, the interparticle distance between the silicon nanoparticles included in the core may be 100 nm or less, 90 nm or less, 80 nm or less, 70 nm or less, 65 nm or less, 60 nm or less, 55 nm or less, 50 nm or less, 45 nm or less, 40 nm or less, or 35 nm or less. When the interparticle distance between the silicon nanoparticles falls within the above range, the size and total pore volume of the pores included in the core may be reduced. When the interparticle distance between the silicon nanoparticles is within the above range, the volume of the pores present in the negative electrode active material may be reduced, and the interparticle distance between the silicon nanoparticles may be narrowed, thereby preventing or substantially preventing the electrolyte from penetrating into the core during battery operation. As a result, side reactions between the electrolyte and the negative electrode active material may be suppressed, thereby improving the battery lifespan.

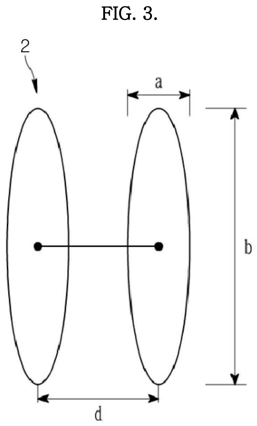

Here, the interparticle distance between the silicon nanoparticles refers to the distance between the centers of the silicon nanoparticles. Referring to FIG. 3, silicon nanoparticle 2 has a minor axis length a and a major axis length b, and the interparticle distance d is the distance between the centers of the silicon nanoparticles 2.

The interparticle distance between the silicon nanoparticles may mean that the number of silicon nanoparticles having an interparticle distance in the above range is 50% to 100%, for example, 60% to 100%, 70% to 100%, or 80% to 100% of the total number of silicon nanoparticles included in the core.

In an embodiment, the silicon nanoparticles may have an average particle diameter (D50) of 50 nm to 150 nm, for example, 50 nm or more, 60 nm or more, 70 nm or more, or 80 nm or more, and 150 nm or less, 140 nm or less, 130 nm or less, or 115 nm or less. When the average particle diameter (D50) of the silicon nanoparticles falls within the above range, side reactions with the electrolyte may be suppressed and the expansion of the silicon nanoparticles may be reduced, thereby improving initial efficiency and lifespan characteristics.

In an embodiment, the silicon nanoparticles may have a full width at half maximum (FWHM) of 0.3° to 7° at an X-ray diffraction angle $(2\theta)$ on the (111) plane using CuK$\alpha$ rays. Accordingly, lifespan characteristics may be improved.

The FWHM of the silicon nanoparticles at the X-ray diffraction angle $(2\theta)$ on the (111) plane using CuK$\alpha$ rays may be controlled by adjusting the size of the silicon particles or changing the silicon nanoparticle manufacturing process.

In an embodiment, the silicon nanoparticles may have an aspect ratio of 2 to 8, for example, 2 to 6, and the silicon nanoparticles may have a minor axis length a of 20 nm to 50 nm and a major axis length b of 50 nm to 300 nm. When the aspect ratio, major axis length b and minor axis length a of the silicon nanoparticles fall within the above ranges, side reactions between the negative electrode active material and the electrolyte may be suppressed, and the expansion of the silicon nanoparticles may be reduced, thereby improving the initial efficiency and lifespan characteristics.

In an embodiment, the silicon nanoparticles may be included in an amount of 20% by weight to 80% by weight, 30% by weight to 70% by weight, 30% by weight to 60% by weight, or 30% by weight to 50% by weight based on the total weight of the negative electrode active material. When the content of the silicon nanoparticles is within the above range, battery capacity may be improved.

The amorphous carbon included in the core may be soft carbon, hard carbon, mesophase pitch carbide, calcined coke, or a combination thereof.

When the amorphous carbon is included in the core, the pore volume of the negative electrode active material may be reduced, thereby suppressing side reactions with the electrolyte. Also, the expansion of the silicon nanoparticles within the negative electrode active material may be buffered, thereby suppressing battery swelling. In addition, the amorphous carbon acts as a binder, thereby mitigating breakage of the negative electrode active material to maintain the shape of the negative electrode active material well.

In an embodiment, the coating layer may include amorphous carbon and may have a thickness of 1 nm to 900 nm, for example, 5 nm to 800 nm. This may reduce the specific surface area of the negative electrode active material and prevent the electrolyte from being introduced into the negative electrode active material. As a result, side reactions with the electrolyte may be minimized or reduced and the lifespan characteristics of the battery may be improved.

The amorphous carbon included in the coating layer may be soft carbon, hard carbon, mesophase pitch carbide, calcined coke, or a combination thereof, and may be a compound which is the same as or different from the amorphous carbon contained in the core.

In an embodiment, the amorphous carbon may be included in an amount of 20% by weight to 80% by weight, for example, 20% by weight to 70% by weight, 20% by weight to 60% by weight, 20% by weight to 50% by weight, or 20% by weight to 40% by weight, based on the total weight of the negative electrode active material. When the content of the amorphous carbon is within the above range, side reactions between the negative electrode active material and the electrolyte may be suppressed.

The negative electrode active material according to an embodiment may have an average particle diameter (D50) of 2 $\mu$m to 15 $\mu$m, for example, 3 $\mu$m to 13 $\mu$m, or 5 $\mu$m to 10 $\mu$m. When the average particle diameter of the negative electrode active material is within the above range, lithium ions may easily diffuse into the negative electrode active material, thereby improving battery resistance and C-rate characteristics. Also, side reactions with the electrolyte may be reduced by suppressing an excessive increase in the specific surface area of the negative electrode active material.

The average particle diameter D50 of the negative electrode active material can be appropriately adjusted by controlling the disintegration conditions and grinding conditions during the manufacture of the negative electrode active material.

In an embodiment, in the negative electrode active material, the pores having a size of 200 nm or less may have a total pore volume of $3.0 \times 10^{-2}$ cm$^3$/g or less, for example, $2.5 \times 10^{-2}$ cm$^3$/g or less, $2.3 \times 10^{-2}$ cm$^3$/g or less, $2.0 \times 10^{-2}$ cm$^3$/g or less, $1.9 \times 10^{-2}$ cm$^3$/g or less, $1.8 \times 10^{-2}$ cm$^3$/g or less, $1.7 \times 10^{-2}$ cm$^3$/g or less, $1.6 \times 10^{-2}$ cm$^3$/g or less, $1.5 \times 10^{-2}$ cm$^3$/g or less, $1.4 \times 10^{-2}$ cm$^3$/g or less, $1.3 \times 10^{-2}$ cm$^3$/g or less, $1.2 \times 10^{-2}$ cm$^3$/g or less, $1.1 \times 10^{-2}$ cm$^3$/g or less, $1.0 \times 10^{-2}$ cm$^3$/g or less, $0.9 \times 10^{-2}$ cm$^3$/g or less, $0.8 \times 10^{-2}$ cm$^3$/g or less, $0.7 \times 10^{-2}$ cm$^3$/g or less, $0.6 \times 10^{-2}$ cm$^3$/g or less, or $0.5 \times 10^{-2}$ cm$^3$/g or less. Within the above range, side reactions between the electrolyte and silicon nanoparticles may be suppressed, thereby improving initial efficiency and lifespan characteristics.

The total pore volume of the pores having a size of 200 nm or less may be quantitatively measured using a Barrett-Joyner-Halenda (BJH) analysis device.

In an embodiment, the negative electrode active material may have a pore size of 200 nm or less, for example, 170 nm or less, 150 nm or less, 130 nm or less, 100 nm or less, or 50 nm or less. When the pore size is controlled within the above range, side reactions between the electrolyte and the silicon nanoparticles may be reduced, and a battery having improved initial efficiency and lifespan characteristics may be obtained.

In an embodiment, the negative electrode active material may have a BET specific surface area of 10 m$^2$/g or less. When the BET specific surface area is within the above range, side reactions with the electrolyte may be suppressed, thereby improving the efficiency characteristics of the battery.

In an embodiment, in the negative electrode active material, the silicon nanoparticles and the amorphous carbon may be included in a weight ratio of 80:20 to 20:80, for example, 70:30 to 30:70, 70:30 to 40:60, or 70:30 to 50:50 based on the total 100 parts by weight of the silicon nanoparticles and the amorphous carbon. When the content of the silicon nanoparticles and the amorphous carbon is within the above range, the internal pore volume may be reduced and the amorphous carbon may be uniformly (uniformly or substantially uniformly) dispersed inside and on the surface of the negative electrode active material. As a result, side reactions with the electrolyte may be suppressed and the performance of the negative electrode active material may be improved.

A method of preparing the negative electrode active material according to an embodiment will be described.

The method of preparing the negative electrode active material includes mixing and dispersing silicon nanoparticles and amorphous carbon to prepare a mixture; spraying, drying, and compressing the mixture to manufacture a molded body; and heat-treating the molded body.

Silicon nanoparticles and amorphous carbon are mixed and dispersed to prepare a mixture. The silicon nanoparticles and the amorphous carbon are as described above.

The prepared mixture is sprayed, dried, and compressed to manufacture a molded body.

The drying may be performed at 50°C to 150°C using a spray dryer.

In an embodiment, the compression may be performed at a pressure of 50 MPa to 150 MPa, for example, 75 MPa to 150 MPa or 75 MPa to 125 MPa. When the molded body is compressed within the above pressure range, the spacing between the silicon nanoparticles may be appropriately maintained and the volume of the pores formed inside the negative electrode active material may be controlled, thereby suppressing side reactions between the electrolyte and the silicon nanoparticles and improving initial efficiency and lifespan characteristics.

The manufactured molded body is heat-treated to prepare the negative electrode active material.

In an embodiment, the heat treatment may be performed at a temperature of 700°C to 1,100°C, for example, 800°C to 1,050°C, or 900°C to 1,000°C. When the heat treatment is performed within the above temperature range, the strength of the negative electrode active material may be enhanced as the amorphous carbon is carbonized. Also, the conductivity of the negative electrode active material may be improved, and the initial efficiency of the battery may be improved.

The heat treatment may be performed under a nitrogen ($N_2$) atmosphere in a furnace.

In an embodiment, the negative electrode active material may have a sphericity of 0.7 or more, and, in an embodiment, 0.7 or more and 1.0 or less. The sphericity refers to the ratio (Lb/La) of the minor axis length (Lb) to the major axis length (La) when the negative electrode active material has a circular or elliptical shape.

In one specific embodiment, the negative electrode active material may have an elliptical or circular cross-section. Therefore, a sphericity of 1.0 means that the negative electrode active material is substantially in a perfectly spherical shape. Accordingly, it will be understood by those skilled in the art that the maximum value of sphericity is 1.0 and cannot exceed 1.0.

When the sphericity of the negative electrode active material is 0.7 or more, the surface area of the negative electrode active material may be reduced. Thus, since the area in which the negative electrode active material comes into contact with the electrolyte or the area in which the negative electrode active material reacts with lithium is reduced, side reactions with the electrolyte may be reduced, and reactions with lithium may also be reduced. Also, volume expansion may also be reduced by the uniform expansion of the active material in the negative electrode.

The effect of this decrease in surface area may be more effective when the BET specific surface area of the negative electrode active material is 10 $m^2$/g or less, for example, from 0.5 $m^2$/g to 10 $m^2$/g. When the BET specific surface area value of the negative electrode active material is 10 $m^2$/g or less, or, according to an embodiment, 0.5 $m^2$/g to 10 m2/g, there may be an advantage in that performance may be improved by reducing the contact with the electrolyte to suppress side reactions, and initial efficiency may be enhanced.

That is, since the negative electrode active material according to an embodiment has a sphericity of 0.7 or greater and a BET specific surface area of 10 $m^2$/g or less, the negative electrode active material may be an active material in which side reactions with the electrolyte are reduced and reactions with lithium are also reduced.

In the negative electrode active material, the silicon nanoparticles are primary particles, and these primary particles may be included in the silicon-carbon composite in the form of secondary particles into which at least one primary particle is assembled. Accordingly, the silicon-carbon composite may include secondary particles into which Si nanoparticles are assembled.

In an embodiment, the silicon nanoparticles may be in the form of a flaky, or flake-like, type, a spherical shape, or the like, but the present invention is not limited thereto. Also, the secondary particles into which at least one primary particle is assembled may have a spherical shape.

In an embodiment, the amorphous carbon may be disposed to cover the surfaces of the secondary particles. That is, the negative electrode active material according to an embodiment may include a core including the silicon nanoparticles, and, according to an example, may include a secondary particle core into which at least one primary particle, which is a silicon nanoparticle, is assembled, and amorphous carbon surrounding the core. In an embodiment, the core refers to a region located inside the active material. That is, the core refers to a region that is not exposed to the outside because the core is surrounded by amorphous carbon. Therefore, the core may be referred to as a region located inside the amorphous carbon surrounding the core.

Also, the amorphous carbon may be filled between the primary particles. When the amorphous carbon is filled between the primary particles, it can be seen that the amorphous carbon is disposed to cover the surfaces of the primary particles. In this way, when the amorphous carbon is filled between the primary particles, the pore volume of the negative electrode active material may be reduced, thereby suppressing side reactions with the electrolyte. Also, when the primary particles, which are silicon nanoparticles, expand, the amorphous carbon may buffer this expansion. In addition, since the amorphous carbon filled between the primary particles may function as a binder, the amorphous carbon may prevent or substantially prevent the negative electrode active material particles from breaking and improve conductivity.

The amorphous carbon may be soft carbon, hard carbon, mesophase pitch carbide, calcined coke, or a combination thereof.

The silicon nanoparticles may be flaky, or flake-like. That is, the silicon nanoparticles may be flake-shaped having a major axis and a minor axis. In an embodiment, the major axis/minor axis ratio of the silicon particles, for example, the width/thickness ratio, may be in a range from 5 to 20. When the major axis/minor axis ratio of the silicon particles falls within the above range, the expansion of the Si nanoparticles may be reduced, thereby improving the initial efficiency and lifespan characteristics of a battery including the active material.

In an embodiment, the silicon nanoparticles may have a particle diameter of 10 nm to 200 nm. The particle diameter may be the average particle diameter of the particles. In this case, the average particle size may refer to the particle diameter (D50) measured by cumulative volume. Unless otherwise defined in the present specification, the particle diameter (D50) refers to the average particle diameter (D50) of particles having a cumulative volume of 50% by volume in the particle size distribution. When the size of the Si nanoparticles falls within the above range, the side reaction between the negative electrode active material and the electrolyte is suppressed and the expansion of the Si nanoparticles is reduced, thereby improving the initial efficiency and lifespan characteristics of the battery.

In an embodiment, when the silicon nanoparticles are secondary particles into which at least one primary particle is assembled, the secondary particles may have a particle size of 2 $\mu$m to 15 $\mu$m, and, in an embodiment, 5 $\mu$m to 10 $\mu$m. In an embodiment, the primary particles may have a particle size of 10 nm to 200 nm. When the average particle size of the negative electrode active material is within the above range, lithium ions may easily diffuse into the negative electrode active material, and electrical resistance and C-rate characteristics may be improved.

In an embodiment, the full width at half maximum (FWHM) (111) of the diffraction peak on the (111) plane of the silicon particles as measured by X-ray diffraction using CuK$\alpha$ rays may be 0.3 degrees (°) to 7 degrees (°). When the FWHM (111) of the Si particles falls within the above range, the lifespan characteristics of the battery may be improved.

The X-ray diffraction measurement is performed using CuK$\alpha$ rays as target rays. In this case, the measurement is performed under the measurement conditions of $2\theta = 40°$ to $50°$, a scan speed (°/S) of 0.04 to 0.06, and a step size (°/step) of 0.01 to 0.03.

In an embodiment, the mixing ratio of the silicon nanoparticles and the amorphous carbon may be a weight ratio of 8:2 to 2:8, and, in an embodiment, may be a weight ratio of 7:3 to 5:5. In an embodiment, since the silicon nanoparticles are present in the negative electrode active material in the form of secondary particles into which the silicon nanoparticles are assembled, the mixing ratio of the silicon nanoparticles and the amorphous carbon may be viewed as a mixing ratio of the secondary particles and the amorphous carbon. When the mixing ratio of the silicon nanoparticles and the amorphous carbon falls within the above range, better capacity may be achieved, particularly, a higher capacity compared to a crystalline carbon negative electrode active material.

In an embodiment, the amorphous carbon may be present as a coating layer that coats the surfaces of the secondary particles, and, in addition to this coating layer form, may also be filled between the primary particles. In an embodiment, regardless of whether the amorphous carbon is filled between the primary particles or is present as a coating layer, or present in any other form, the total content of the amorphous carbon included in the negative electrode active material may be 20 to 80% by weight based on a total of 100% by weight of the negative electrode active material.

In an embodiment, when the amorphous carbon is present as a coating layer that coats and surrounds the surfaces of the secondary particles, the amorphous carbon may be present on the surfaces of the secondary particles with a thickness of 1 nm to 1,000 nm, for example, a thickness of 30 nm to 200 nm. When the thickness of the amorphous carbon layer falls within the above range, the conductivity of the negative electrode active material may be further improved, and the contact with the electrolyte may be reduced, thereby effectively suppressing an increase in resistance due to the generation of side reaction products.

In an embodiment, the negative electrode active material may have a particle diameter of 40 $\mu$m or less, for example, a particle diameter of 2 $\mu$m to 15 $\mu$m. When the particle diameter of the negative electrode active material falls within the above range, lithium ions may easily diffuse into the negative electrode active material, and the battery resistance and C-rate characteristics may be improved.

The negative electrode active material according to an embodiment may be manufactured by the following process.

First, silicon particles are prepared. These silicon particles may be nanoparticles, and, in an embodiment, may be nanoparticles having a particle diameter of 10 nm to 200 nm. These nanometer-sized silicon particles may be obtained by performing a conventional process of producing nanoparticles, such as a grinding process. In an embodiment, the full width at half maximum (FWHM) (111) of the diffraction peak on the (111) plane of the silicon nanoparticles as measured by X-ray diffraction using CuK$\alpha$ rays may be 0.3 degrees (°) to 7 degrees (°).

The silicon particles are dispersed in a solvent to prepare a silicon particle solution. As the solvent, any alcohol that is easily volatilized without oxidizing the silicon particles may be appropriately used. For example, isopropyl alcohol, ethanol, methanol, butanol, or a combination thereof may be used as the solvent. In an embodiment, the concentration of the silicon particle dispersion is 10 to 30% by weight.

The prepared silicon particle solution is spray-dried. Through this process, nanometer-sized silicon particles (primary particles) are assembled to manufacture micrometer-sized spherical Si secondary particles. The secondary particles may include internal pores, i.e., gaps between the primary particles. This spray drying process may control the sphericity of the manufactured negative electrode active material by controlling the type of nozzle and the atmosphere used. That is, it is desirable to use a two-fluid nozzle capable of forming fine particles by mixing two fluids (liquid and gas). When the two-fluid nozzle is used, fine and spherical particles may be formed. Since the formed particles have a small size, an additional grinding process is not required, which makes it possible to maintain the spherical shape. When a disk-type nozzle that sprays while rotating is used as the nozzle, large particles are formed, and an additional grinding process is required due to the large particle size. Also, particles having various shapes, such as spherical, elliptical, and donut-type shapes, are formed, which is not desirable.

In an embodiment, the spray drying process is carried out under a $N_2$ atmosphere, for example, by blowing $N_2$ at a flow rate of 40 L/min to 50 L/min or a flow rate of 30 L/min to 40 L/min. When the flow rate of $N_2$ in the spray drying process falls within the above range, spherical microparticles having an appropriate size may be formed. When the flow rate of $N_2$ is less than 30 L/min, the sprayed products may agglomerate, which is not desirable due to the increased size of the particles. On the other hand, when the flow rate of $N_2$ is greater than 50 L/min, there may be a problem that the size of the manufactured particles is too small and a large amount of fine powder is generated.

In an embodiment, the spray drying process may be carried out at 120°C to 170°C. When the spray drying process is carried out in the above temperature range, the temperature is sufficiently higher than the boiling point of the solvent, and thus micro-sized spherical Si particles may be sufficiently dried through rapid volatilization, which is desirable.

The micrometer-sized Si secondary particles having a spherical shape, into which the resulting Si primary nanoparticles are assembled, are mixed with an amorphous carbon precursor. In an embodiment, the mixing ratio of the secondary particles and the amorphous carbon precursor may be a weight ratio of 80:20 to 20:80, or may be a weight ratio of 60:40 to 50:50.

The amorphous carbon precursor may be a polyimide resin, a furan resin, a phenol resin, a polyvinyl alcohol resin, a poly(meth)acrylic acid resin, a polyurethane resin, a cellulose resin, an epoxy resin, a polystyrene resin, petroleum pitch, coal pitch, green coke, mesophase pitch, a coal oil, petroleum heavy oil, coke, or a combination thereof.

The resulting mixture is compression-molded. This compression molding process may be performed under a pressure that may maintain the spherical shape of the micrometer-sized Si secondary particles, for example, under a pressure of 20 MPa to 150 MPa. Also, the compression molding process may be performed for 1 to 5 minutes. As the compression molding process is performed, the micrometer-sized spherical Si secondary particles and the amorphous carbon precursor may be firmly attached to each other, and the amorphous carbon precursor may be easily inserted between the primary particles. Accordingly, since the amorphous carbon precursor may be easily inserted into the pores formed inside the secondary particles, the amorphous carbon may be present between the primary particles in an appropriate amount (appropriate thickness) in the final active material. As a result, the amorphous carbon may form a coating layer with an appropriate thickness on the surfaces of the secondary particles. If the compression molding process is not performed, the micrometer-sized spherical secondary particles and the amorphous carbon precursor are not strongly attached to each other, and the amorphous carbon precursor is also not easily inserted between the primary particles and is located mostly on the surfaces of the secondary particles. As a result, the amorphous carbon in the final negative electrode active material is present in an excessively thick thickness on the surfaces of the secondary particles, which is not desirable.

The resulting compression-molded product is heat-treated to manufacture the negative electrode active material. In an embodiment, the heat treatment process may be performed at 400°C to 1,200°C, or at 700°C to 1,000°C. When the heat treatment process is performed in the above temperature range, the shape of the negative electrode active material may be maintained in a spherical shape. Also, as the amorphous carbon is carbonized, the conductivity of the negative electrode active material may be improved and the initial efficiency of the battery may be improved. Also, the heat treatment process may be performed under a $N_2$ atmosphere. As the amorphous carbon precursor is converted to amorphous carbon through this heat treatment process, the amorphous carbon precursor is included as amorphous carbon in the negative electrode active material.

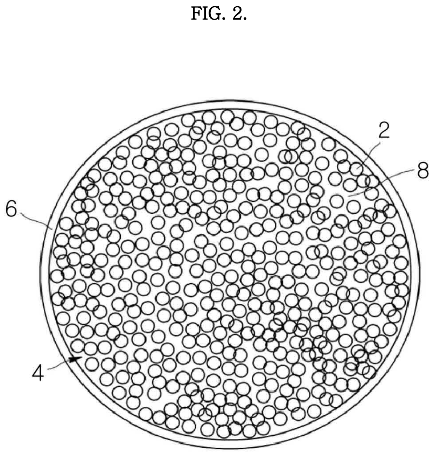

FIG. 2 is a conceptual diagram of the negative electrode active material according to an embodiment.

Referring to FIG. 2, the negative electrode active material includes a core 4 including amorphous carbon and silicon nanoparticles 2; and a coating layer 6 surrounding the core 4. In this case, pores 8 are included in the core 4.

**(ii) Negative electrode active material**

The negative electrode active material (ii) includes a composite of silicon and crystalline carbon; and an amorphous carbon coating layer formed on a surface of the composite and including amorphous carbon.

In an embodiment, the negative electrode active material may be a ternary negative electrode active material including silicon, crystalline carbon and amorphous carbon.

In an embodiment, the negative electrode active material may include a composite core of silicon and crystalline carbon, and an amorphous carbon coating layer formed on a surface of the core. In an embodiment, the amorphous carbon may be present in the core. In an embodiment, the amorphous carbon may be in contact with each of the silicon and crystalline carbon in the core.

In an embodiment, the negative electrode active material may have an aspect ratio of 1 to 2.5, for example, 1 to 2. Within the above range, the negative electrode active material may expand in a more uniform direction, and the expansion of negative electrode active material in the electrode may be effectively reduced. The aspect ratio may be measured from a photograph taken using a controlled pressure scanning electron microscope (CP-SEM). The aspect ratio refers to the ratio of the maximum major axis length to the maximum minor axis length of the negative electrode active material.

In an embodiment, the composite of silicon and crystalline carbon may have an aspect ratio of 1 to 2.5, for example, 1 to 2. Within the above range, the negative electrode active material may swell in a more uniform direction, and the expansion of the negative electrode active material in the electrode may be effectively reduced. The aspect ratio may be measured from a photograph taken using a CP-SEM. The aspect ratio refers to the ratio of the maximum major axis length to the maximum minor axis length of the composite.

In an embodiment, the composite of silicon and crystalline carbon may include pores.

In an embodiment, the pores may be tubular or plate-shaped, and may form a network within the core. In the composite of silicon and crystalline carbon, the porosity may be appropriately controlled. In an embodiment, for example, the porosity (total pore volume) may be 2 to 50% by volume.

In an embodiment, the negative electrode active material may include a crystalline carbon core having pores formed therein, an amorphous carbon shell formed on the surface of the core, silicon particles dispersed in the pores, and amorphous carbon present in the pores.

In an embodiment, the weight ratio of the silicon and the crystalline carbon in the composite of silicon and crystalline carbon may be in a range from 10:90 to 90:10 based on a total of 100 parts by weight of the silicon and the crystalline carbon. Within the above range, a better capacity, particularly a higher capacity compared to a negative electrode active material made of crystalline carbon, may be provided. In an embodiment, for example, the weight ratio may be 50:50 to 80:20, and a higher capacity may be exhibited within the above range.

In an embodiment, the silicon may be spherical and have an average particle diameter D50 of 10 to 150 nm, for example, 40 to 120 nm. Within the above range, the cycle lifespan characteristics of the battery may be improved.

The silicon may be silicon (Si) particles.

In an embodiment, the crystalline carbon may have a major axis length of 5 to 20 $\mu$m, for example, 5 to 10 $\mu$m, and an aspect ratio of 4 to 10, for example, 4 to 8. Within the above ranges, the cycle lifespan characteristics of the battery may be improved, and since the negative electrode plate does not experience excessive volume expansion during charging and discharging of the rechargeable lithium battery, swelling does not occur. The aspect ratio can be measured by a CP-SEM method. The aspect ratio is the ratio of the maximum major axis length to the maximum minor axis length.

The crystalline carbon may be natural graphite, artificial graphite, or a combination thereof.

In an embodiment, the crystalline carbon may be in the form of a rod having an elliptical cross-section.

The amorphous carbon coating layer may be formed on a surface of the composite to improve the conductivity of the composite, thereby further improving performance, and may reduce direct contact between silicon and the electrolyte, thereby effectively suppressing an increase in resistance due to the generation of side reaction products.

In an embodiment, the amorphous carbon coating layer may have a thickness of 5 to 1,000 nm, for example, 5 to 30 nm. Within the above range, the thickness level of the layer may be a level at which there is not a problem with electron transfer resistance.

The amorphous carbon in the amorphous carbon coating layer and the amorphous carbon present in the core may be petroleum pitch, coal pitch, or a combination thereof.

In an embodiment, the content of the amorphous carbon coating layer in the negative electrode active material may be in a range from 10 to 60% by weight of the negative electrode active material. Within the above range, the performance improvement effect of the battery may be achieved.

In an embodiment, the negative electrode active material may include 20 to 70% by weight of silicon, 3 to 50% by weight of crystalline carbon, and 20 to 50% by weight of amorphous carbon. Within the above range, expansion of the negative electrode active material due to charging and discharging may be effectively suppressed, and cycle lifespan and output characteristics may be improved.

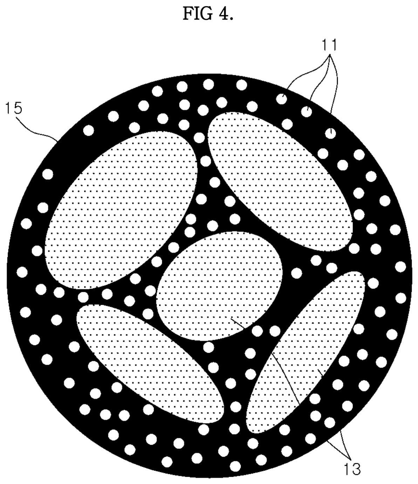

FIG. 4 is a conceptual diagram of the negative electrode active material according to an embodiment.

Referring to FIG. 4, the negative electrode active material includes silicon particles 11, crystalline carbon 13, and amorphous carbon 15. The amorphous carbon 15 is present between the silicon particles 11 and the crystalline carbon 13, and the amorphous carbon 15 may also be present in the coating layer surrounding the silicon particles 11 and the crystalline carbon 13.

Herein, a method of preparing the negative electrode active material will be described.

The negative electrode active material may be prepared by mixing silicon particles, artificial graphite, and amorphous carbon in a solvent to prepare a mixture, and spray drying and heat-treating the mixture. The solvent may be isopropyl alcohol, ethanol, methanol, or a combination thereof. In an embodiment, the spray drying may be performed at 90 to 120°C, and the heat treatment may be performed at 900 to 1,000°C in a nitrogen atmosphere, an argon atmosphere, a hydrogen atmosphere, or a combination thereof.

**(iii) Negative electrode active material**

The negative electrode active material (iii) includes silicon nanoparticles and an amorphous carbon coating layer disposed on surfaces of the silicon nanoparticles.

In an embodiment, since the negative electrode active material has a spherical shape, the negative electrode active material may be well dispersed throughout the negative electrode plate, thereby reducing the expansion rate of the negative electrode plate during charging and discharging. Also, when the negative electrode active material is mixed and used with crystalline carbon, i.e., the first negative electrode active material, the spherical negative electrode active material may be better inserted between the crystalline carbon molecules, and thus may be better dispersed throughout the negative electrode.

In an embodiment, the negative electrode active material has a sphericity S of 0.9 to 1.0 according to Equation 1 above. Within the above range, it may be easy to reduce the expansion rate of the negative electrode plate during charging and discharging.

The negative electrode active material according to an embodiment may have a sphericity of 0.92 to 0.98, or 0.92 to 0.95. When the sphericity of the negative electrode active material falls within the above range, the expansion rate of the negative electrode plate may be more effectively suppressed during charging and discharging.

The negative electrode active material may include pores, and the pores may include mesopores. Here, the mesopores may refer to pores having a pore size of 2 nm to 50 nm. When the negative electrode active material includes mesopores, the effect of the negative electrode plate may be significant.

The negative electrode active material having the above sphericity and mesopores may easily provide long lifespan, high energy density, and boost charging effects at the same time when the above-described first negative electrode active material is mixed with the above-described second negative electrode active material.

In an embodiment, the negative electrode active material may also include macropores having a pore size of greater than 50 nm as pores. Since pores having a pore size of greater than 50 nm are classified as macropores, there is no need to limit the maximum value of the macropores, but the pore size may be up to 500 nm. It is desirable that such macropores are included in an amount of 1% by volume or less based on the total pore volume. In this case, the macropores may be present in an amount of at least 0% by volume, that is, the macropores may not be actually present within the negative electrode active material.

In an embodiment, the negative electrode active material may also include micropores having a pore size of greater than 0 nm and less than 2 nm as pores. The micropores included in the negative electrode active material may correspond to the volume excluding the mesopores in the total pore volume (%), or to the volume excluding the mesopores and the macropores if the pores further include macropores.

Here, the term "pore size" refers to the diameter of a pore when the pore has a circular cross-section, or the length of the longest axis on the cross-section if the cross-section of the pore is not circular.

In an embodiment, the negative electrode active material may have a ratio of the mesopore volume to the total pore volume of the negative electrode active material ((mesopore volume/total pore volume) x 100) of 30% or more and less than 70%. Within the above range, long lifespan, high energy density, and boost charging effects may be further improved. For example, the ratio may be 30% to 68%.

The total pore volume may be the total volume of pores which include mesopores and are formed in the negative electrode active material, regardless of pore size. In an embodiment, the total pore volume may be in a range from 0.001 cm$^3$/g to 0.01 cm$^3$/g, or may be in a range from 0.005 cm$^3$/g to 0.05 cm$^3$/g.

The total pore volume and mesopore volume may each be quantitatively measured using a Barrett-Joyner-Halenda (BJH) analysis device.

The negative electrode active material may have a span value of 1.1 to 1.6 according to the following Equation 2:

Equation 2

$$Span = (D90-D10)/D50,$$

wherein D10 represent the particle size of the negative electrode active material particles having a cumulative volume of 10% by volume in the particle size distribution, D50 represents the particle size of the negative electrode active material particles having a cumulative volume of 50% by volume in the particle size distribution, and D90 represents the particle size of the negative electrode active material particle having a cumulative volume of 90% by volume in the particle size distribution.

The methods of measuring D10, D50, and D90 are as described above.

In an embodiment, the span value may be 1.1 to 1.55, or may be 1.1 to 1.5.

When the span value of the negative electrode active material falls within the above range, this means that the negative electrode active material includes substantially no fine particles. That is, since the negative electrode active material includes almost no irregularly-shaped fine particles that have a size of 1 $\mu$m or less, the negative electrode active material may exhibit a low specific surface area, thereby reducing the side reactions with the electrolyte and improving the lifespan.

In an embodiment, the negative electrode active material may have a low specific surface area. In this case, the specific surface area may be in a range from 0.5 $m^2$/g to 2 $m^2$/g, 0.8 $m^2$/g to 2 $m^2$/g, or 0.8 $m^2$/g to 1.5 $m^2$/g. The specific surface area is lower than that of a conventional silicon-carbon composite negative electrode active material having a specific surface area of approximately 3 $m^2$/g.

The silicon nanoparticles may have a particle diameter of 10 nm to 1,000 nm, and, according to an embodiment, may have a particle diameter of 10 nm to 200 nm, or 20 nm to 150 nm. When the particle diameter of the silicon nanoparticles falls within the above range, excessive volume expansion occurring during charging and discharging may be suppressed, and disconnection of the conductive path due to particle fragmentation during charging and discharging may be prevented or substantially prevented.

The silicon nanoparticles may be assembled to form silicon secondary particles. According to an embodiment, the silicon secondary particles may have an average particle diameter D50 of 1 to 15 $\mu$m. For example, the average particle diameter D50 of the silicon secondary particles may be in a range from 1 to 10 $\mu$m, or 6 to 8 $\mu$m.

In the amorphous carbon coating layer, the amorphous carbon may be soft carbon or hard carbon, mesophase pitch carbide, calcined coke, or a combination thereof.

In an embodiment, the amorphous carbon coating layer may have a thickness of 1 nm to 2 $\mu$m, a thickness of 1 nm to 500 nm, a thickness of 10 nm to 300 nm, or a thickness of 20 nm to 200 nm. When the thickness of the amorphous carbon coating layer falls within the above range, silicon volume expansion during charging and discharging may be well suppressed.

In an embodiment, in the negative electrode active material, the content of the silicon nanoparticles may be in a range from 55 to 64% by weight, or in a range from 58 to 62% by weight, based on a total of 100% by weight of the negative electrode active material. In an embodiment, the content of the amorphous carbon coating layer may be in a range from 36 to 45% by weight or from 38 to 42% by weight, based on a total of 100% by weight of the negative electrode active material. Within the above range, the capacity of the negative electrode plate may be improved and particle stability may be enhanced.

The negative electrode active material may further include a polymer layer disposed on the amorphous carbon coating layer.

The polymer layer may include a copolymer of polyvinyl alcohol and polyacrylic acid. The copolymer may be a crosslinked copolymer in which polyvinyl alcohol and polyacrylic acid are crosslinked. When the negative electrode active material further includes the polymer layer, volume expansion of the negative electrode active material during charging and discharging may be more effectively suppressed.

Since the polymer layer includes polyvinyl alcohol and polyacrylic acid, the polymer layer may prevent or substantially prevent the electrolyte from penetrating into the negative electrode active material during charging and discharging, particularly, from penetrating into empty spaces of the negative electrode active material, such as pores, thereby more effectively suppressing side reactions between the negative electrode active material and the electrolyte.

The polyvinyl alcohol and polyacrylic acid are aqueous polymers and are environmentally friendly polymers.

In an embodiment, the polymer layer includes a copolymer of polyvinyl alcohol and polyacrylic acid, for example, a crosslinked polymer or a crosslinked copolymer in which the polyvinyl alcohol and the polyacrylic acid are crosslinked. That is, the polymer of the polymer layer may be a crosslinked polymer of polyvinyl alcohol and polyacrylic acid. When the polyvinyl alcohol and polyacrylic acid are crosslinked and included as a crosslinked polymer in the polymer layer, the polymer layer may be maintained without dissolving in a solvent used in the manufacture of a negative electrode active material layer, particularly in water.

In an embodiment, in the negative electrode active material, when both the silicon nanoparticles and the amorphous carbon coating layer are referred to as a silicon-carbon composite, the content of the polymer layer may be in a range from 0.01 parts by weight to 3 parts by weight, or in a range from 1.2 parts by weight to 2.1 parts by weight, based on 100 parts by weight of the silicon-carbon composite. When the content of the polymer layer falls within the above range, the effect resulting from the formation of the polymer layer may be further enhanced.

In an embodiment, in the polymer layer, the mixing ratio of the polyvinyl alcohol and the polyacrylic acid may be a weight ratio of 3:97 to 40:60, a weight ratio of 6:94 to 40:60, or a weight ratio of 6:94 to 20:80. When the mixing ratio of the polyvinyl alcohol and the polyacrylic acid falls within the above range, that is, when the content of the polyacrylic acid is higher than that of the polyvinyl alcohol, cycle lifespan characteristics may be further improved.

In an embodiment, it is also desirable to control the ratio of functional groups contained in the polyvinyl alcohol and the polyacrylic acid included in the polymer layer. In an embodiment, the molar ratio of OH groups contained in the polyvinyl alcohol and COOH groups contained in the polyacrylic acid may be 5:95 to 50:50, and, in an embodiment, may be 10:90 to 30:70. When the molar ratio of the functional groups satisfies the above range, the effect of polymer layer formation may be further improved, and cycle lifespan characteristics may be further improved.

The negative electrode active material may be prepared by the following process.

Micrometer-sized silicon particles are ground to produce nano-sized silicon primary particles. The grinding process may be performed by a conventional process such as ball milling or the like. In the grinding process, a dispersant may be used. The dispersant may be stearic acid, boron nitride (BN), MgS, polyvinylpyrrolidone (PVP), or a combination thereof. The amount of dispersant used is sufficient as long as it enables the milling process of the silicon particles. Therefore, there is no need to limit the amount of dispersant.

In an embodiment, the silicon primary particles may have a particle diameter of 1 nm to 1000 nm, 10 nm to 200 nm, or 20 nm to 150 nm.

The resulting mixture is dried. This drying process may be performed using a spray drying process. By performing the drying process using a spray drying process, a dried product having particles with a more uniform particle diameter and spherical shape may be formed, and secondary particles into which the primary particles are assembled may also be formed. When the dried product has particles with a uniform particle diameter and spherical shape, the subsequently formed amorphous carbon layer may be formed more uniformly over the entire surfaces of the secondary particles.

The dry product is mixed with an amorphous carbon precursor.

Petroleum coke, coal coke, petroleum pitch, coal pitch, green coke, or a combination thereof may be used as the amorphous carbon precursor.

The resulting mixture is subjected to compression molding.

The resulting product may be subjected to further compression molding. This compression molding process may reduce the pores within the negative electrode active material, thereby effectively suppressing side reactions.

The compression molding process may be performed at a level of pressure that may maintain the spherical shape of the resulting product, particularly the negative electrode active material serving as the final product, and may be performed at a pressure of, for example, more than 0 MPa and 30 MPa or less, more than 0 MPa and 200 MPa or less, or 5 MPa to 20 MPa.

The compression molding process may be performed using cold isostatic pressing (CIP). When the compression molding is performed under the above pressure range, the pores may be appropriately reduced while maintaining a spherical shape without generating fine particles.

Next, the resulting compression-molded product is carbonized. The carbonization process may be performed at 600°C to 1,000°C. The dispersant may be removed during this carbonization process. Also, the carbonization process may be performed in an $N_2$ atmosphere, a helium atmosphere, or a combination thereof. Through this carbonization process, the amorphous carbon precursor is converted to amorphous carbon and thus forms an amorphous carbon coating layer that surrounds the surface of the compression-molded product.

When the carbonization process is performed within the above temperature range, a problem of excessive growth of Si particles may be suppressed, and the formation of SiC may also be suppressed, and, also, the electrical conductivity of amorphous carbon may be improved. Also, when some of the amorphous carbon can be inserted into the pores formed between the primary particles and disposed on the surfaces of the primary particles, the amorphous carbon may be included to surround the surfaces of the primary particles. When the atmosphere of the carbonization process satisfies the above conditions, the amorphous carbon may be effectively formed while suppressing the oxidation of silicon and the formation of SiC, thereby reducing the resistance of the active material.

Instead of the process of mixing the dried product with the amorphous carbon precursor, a vapor-phase coating process using an amorphous carbon precursor gas may be performed on the dried product. In this case, an amorphous carbon coating layer may be formed on the surface of the product without performing a separate carbonization process. Therefore, a compression process may be performed after the vapor-phase coating process. The conditions for the compression process are as described above.

When the negative electrode active material layer according to an embodiment further includes a polymer layer, a process of mixing the manufactured negative electrode active material (referred to as a silicon-carbon composite) and the polymer solution, drying the resulting mixture, and then heat-treating the mixture may be further performed.

The polymer solution may be prepared by mixing polyvinyl alcohol and polyacrylic acid in a solvent. In this case, the solvent may be water, ethanol, or a combination thereof.

At this time, the mixing ratio of the silicon-carbon composite and the polymer solution may be appropriately adjusted so that the above polymer content and mixing ratio of the polyvinyl alcohol and the polyacrylic acid may be achieved in the manufactured negative electrode active material.

According to the heat treatment process, a condensation reaction occurs between the OH group of polyvinyl alcohol and the COOH group of polyacrylic acid. As a result, the polyvinyl alcohol and the polyacrylic acid may be crosslinked to form a crosslinked polymer.

In an embodiment, the heat treatment process may be performed at 150°C to 200°C. When the heat treatment process is performed within the above temperature range, the condensation reaction, i.e., a crosslinking reaction, may occur easily, thereby facilitating formation of the crosslinked polymer.

Then, the heat-treated product is subjected to a classification process. This classification process may be performed using a sieve so that the span value (defined by Equation 2 above) of the negative electrode active material becomes 1.1 to 1.6. For example, the classification process may be performed so as to obtain an active material having a particle diameter such that the span value obtained from the D10, D50, and D90 of the active material becomes 1.1 to 1.6.

In an embodiment, in addition to the first negative electrode active material, the second negative electrode active material, and the third negative electrode active material described above, the negative electrode plate may further include a negative electrode active material (a fourth negative electrode active material) different from the above- described first to third negative electrode active materials.

The fourth negative electrode active material may further include a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite, such as amorphous, plate-shaped, flaky, or flake-type, spherical or fibrous natural or artificial graphite, and examples of the amorphous carbon include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, $SiO_x$ ($0 < x \leq 2$), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the composite may include secondary particles (core) into which silicon primary particles are assembled, and an amorphous carbon coating layer (shell) disposed on the surfaces of the secondary particles. The amorphous carbon may be disposed between the primary particles of silicon, for example, such that the primary particles of silicon may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer disposed on the surface of the core.

The Si-based negative electrode active material or the Sn-based negative electrode active material may be used in combination with the carbon-based negative electrode active material.

**Binder**

The dry negative electrode plate for a rechargeable lithium battery may include a first binder.

The first binder may be included without particular limitation as long as it is fiberizable in the manufacture of a dry electrode film described below. The fiberization may refer to a process of dividing a polymer into fine particles. For example, the fiberization may be performed using a mechanical shear force or the like. The fiberized polymer fibers have surfaces thereof loosened to generate a large number of fine fibers, and the generated fine fibers entangle the electrode active material and/or a conductive material described below to manufacture a dry electrode film.

In an embodiment, the first binder may include polytetrafluoroethylene (PTFE), polyvinylidene fluoride (PVDF), a polyolefin, or a mixture thereof. In an embodiment, the first binder may include polytetrafluoroethylene, and, in an embodiment, may be polytetrafluoroethylene. In an embodiment, one or more of polytetrafluoroethylene and polyvinylidene fluoride (PVDF) may be included in an amount of 60% by weight or more, for example, 90 to 100% by weight, or 100% by weight, based on the total weight of the first binder.

In an embodiment, the first binder may be included in a fiberized state in the dry electrode film.

In an embodiment, the dry electrode film may include 80 to 99.5% by weight, for example, 90 to 99.5% by weight, of the electrode active material, and 0.5 to 20% by weight, for example, 0.5 to 10% by weight, of the first binder. Within the above range, the manufacture of the dry electrode film may be facilitated, and the fiberized binder may improve the binding strength between the materials constituting the electrode.

The dry electrode film may further include a conductive material.

The conductive material is not particularly limited as long as it is conductive without causing chemical changes in the battery. For example, graphite, such as natural graphite, artificial graphite, or the like; carbon black-based compounds, such as carbon black, acetylene black, Ketjen black, channel black, furnace black, lamp black, summer black, and the like;

conductive fibers, such as carbon fibers, metal fibers, or the like; metal powders, such as fluorocarbon, aluminum, nickel powder, and the like; conductive whiskers, such as zinc oxide, potassium titanate, and the like; conductive metal oxides, such as titanium oxide and the like; and conductive materials, such as polyphenylene derivatives and the like, may be used as the conductive material. In an embodiment, to uniformly mix the conductive material and improve the conductivity of the conductive material, the conductive material may include one or more selected from the group consisting of activated carbon, graphite, carbon black, and carbon nanotubes. In an embodiment, the conductive material may include activated carbon.

In an embodiment, the dry electrode film may include 80 to 99% by weight, for example, 90 to 99.5% by weight, of the electrode active material, 0.5 to 20% by weight, for example, 0.5 to 10% by weight, of the first binder, and 0.5 to 20% by weight, for example, 0.5 to 10% by weight, of the conductive material. Within the above range, the manufacture of the dry electrode film may be facilitated, and the effect of imparting electronic conductivity may be achieved.

The electrode active material layer further includes a second binder, and the second binder may include a non-fiberized binder. For example, the non-fiberized binder may include one or more selected from polyethylene oxide, polyvinylidene fluoride, and polyvinylidene fluoride-co-hexafluoropropylene.

The dry electrode film may be manufactured by the following steps:

(a) preparing a powder mixture including a negative electrode active material and a binder including a first binder;
(b) kneading the powder mixture to prepare a mixture mass;
(c) grinding the mixture mass to obtain an electrode powder; and
(d) calendering the electrode powder to obtain a film.

First, the negative electrode active material and a binder including a first binder are mixed to prepare a powder mixture. The mixing is performed such that the negative electrode active material and the binder can be uniformly (uniformly or substantially uniformly) distributed in the mixture. In this case, since the mixture is mixed in the form of powder, it is not limited as long as it allows simple mixing of the above components. In an embodiment, the mixture is used to manufacture a dry electrode film, and the mixture does not include a solvent. The mixing may be performed by dry mixing, and may be performed, for example, by introducing the materials into a device such as a blender. The mixture may also further include the conductive material.

In an embodiment, the mixing time is not particularly limited, but, in an embodiment, the mixing may be performed for 1 second to 10 minutes. Meanwhile, the mixing speed is not particularly limited, but, in an embodiment, may be appropriately controlled within a range of approximately 3,000 rpm to 30,000 rpm. As an example, the mixture may be prepared by mixing in a mixer at 5,000 rpm to 20,000 rpm for 30 seconds to 2 minutes, for example, at 10,000 rpm to 15,000 rpm for 30 seconds to 5 minutes, to ensure high uniformity and control the crystallinity of the binder resin.

Next, a kneading process for fiberizing the binder is performed on the mixture obtained above. The kneading is a process of binding or connecting the electrode active materials and/or the conductive material while fiberizing the binder in order to form a mixture mass having a solid content of 100% by weight.

In an embodiment, the kneading in step (b) may be controlled at a speed of 10 rpm to 100 rpm. For example, the kneading may be controlled at a speed of 40 rpm to 70 rpm. The kneading may be performed for 1 minute to 30 minutes. For example, the kneading may be performed at a speed of 40 rpm to 70 rpm for 3 minutes to 7 minutes. Meanwhile, the kneading may be controlled at a shear rate in the range of 10/s to 500/s. In an embodiment of the present invention, the kneading may be performed for 1 minute to 30 minutes, and the shear rate may be controlled in the range of 30/s to 100/s.

Also, the kneading step may be performed under conditions of a high temperature and a pressure higher than atmospheric pressure, and may be performed under conditions of a pressure higher than atmospheric pressure. In an embodiment, the kneading may be performed on the mixture at a temperature ranging from 70°C to 200°C, and, in an embodiment, at a temperature of 90°C to 150°C.

In addition, the kneading may be performed at a pressure higher than atmospheric pressure, specifically at a pressure of 1 to 3 atm, and, in an embodiment, 1.1 to 3 atm. If the kneading is performed at a very high pressure beyond the above range, excessive shear force and pressure may cause the formed fibers to break or excessive increase the density of the mixture mass, which is not desirable. That is, according to embodiments of the present invention, a low-shear mixing process is performed under conditions of a high temperature and a pressure higher than atmospheric pressure instead of a high-shear mixing process, and the intended effects of the present invention may be achieved.

Then, a step of re-grinding the mixture mass prepared through the kneading step to obtain an electrode powder is performed.

The mixture mass prepared through the kneading may be directly calendered. However, in this case, the mixture mass may be pressed under a strong pressure and a high temperature so that the mixture mass can form a thin film. As a result, there may be problems in which the density of the film becomes too high or a uniform film cannot be obtained. Therefore, according to embodiments of the present invention, the prepared mixture mass undergoes the grinding step.

The grinding may be performed using a known grinding device, such as a blender or grinder, but the present invention is not limited thereto. In an embodiment of the present invention, the grinding speed may be controlled in the range of 3,000 rpm to 30,000 rpm. In an embodiment, the grinding time may be appropriately controlled in the range of 1 second to 10 minutes. However, the grinding speed and time are not particularly limited to the above ranges. As an example, the grinding may be performed at a speed of 5,000 rpm to 20,000 rpm for 30 seconds to 10 minutes, or at a speed of 10,000 rpm to 18,000 rpm for 30 seconds to 5 minutes. When sufficient grinding is performed within the above range, film formation may be facilitated and the generation of fine particles may be reduced.

The electrode powder is heated and pressed to manufacture a film. In an embodiment, the electrode powder obtained by completing the grinding step as described above is subjected to a calendering process.

The electrode powder is processed into a sheet-shaped film by heat-pressing through the calendering process. The calendering process may be performed using a pair of opposing calendering rollers. In an embodiment of the present invention, the calendering process may be performed by passing the electrode powder through a plurality of calendering rollers.

The electrode powder may be pretreated before performing the calendering process.

The pretreatment process may be performed by applying heat to the electrode powder such that the temperature of the powder can be maintained at 80°C or higher, and, in an embodiment, 100°C or higher, for a certain (e.g., predetermined) period of time. The pretreatment process may be performed for 1 minute or longer, and the pretreatment process time may be appropriately adjusted depending on the amount of powder. For example, the temperature of the powder may be maintained at a temperature of 80°C or higher for 1 minute or longer, or may be maintained at a temperature of 100°C or higher for 1 minute or longer. In an embodiment, the heating temperature of the electrode powder is controlled to be below the melting point of the binder resin to prevent or substantially prevent the electrode components included in the electrode powder, for example, the binder resin, from deteriorating. For example, the heating temperature may be controlled to be below 320°C. The pretreatment process may be performed using a conventional heating device, such as a convection oven or an infrared heating device. At this time, it is desirable that the electrode powder does not stagnate during stirring and heating.

In an embodiment of the present invention, the dry electrode film may have a thickness of 100 $\mu$m to 200 $\mu$m, but is not particularly limited thereto. For example, the dry electrode film may have a thickness of 100 $\mu$m to 150 $\mu$m.

The electrode may further include a current collector.

The current collector is not particularly limited as long as it provides high conductivity without causing chemical changes in the battery. For example, stainless steel, aluminum, nickel, titanium, calcined carbon, copper or aluminum, or stainless steel, copper foil, nickel foil, stainless steel foil, titanium foil, nickel foam, copper foam, or a conductive metal-coated polymer substrate of which a surface is treated with carbon, nickel, titanium, silver, and the like may be used as the current collector. The current collector may also have fine irregularities formed on a surface thereof to increase the adhesion of the electrode active material, and may have various forms such as films, sheets, foil, nets, porous bodies, foams, non-woven fabrics, and the like.

In an embodiment of the present invention, the current collector may have a thickness of 10 $\mu$m to 50 $\mu$m, but the present invention is not particularly limited thereto. For example, the current collector may have a thickness of 10 $\mu$m to 20 $\mu$m.

Another embodiment provides a rechargeable lithium battery including the negative electrode plate for a rechargeable lithium battery.

The rechargeable lithium battery may include the negative electrode plate for rechargeable lithium battery and a positive electrode. The negative electrode plate may be substantially the same as described above.

**Positive electrode**

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can function as a sacrificial positive electrode.

**Positive electrode active material**

The positive electrode active material may include a compound (lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any of the following Chemical Formulas may be used.

$Li_aA_{1-b}X_bO_{2-c}D_c$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8, 0≤b≤0.5, 0≤c≤0.5, and 0<α<2); $Li_aNi_{1-b-c}Mn_bX_cO_{2-\alpha}D_\alpha$ (0.90≤a≤1.8, 0≤b≤0.5, 0≤c≤0.5, and 0<α<2); $Li_aNi_bCo_cL^1_dG_eO_2$ (0.90≤a≤1.8, 0≤b≤0.9, 0≤c≤0.5, 0≤d≤0.5, and 0≤e≤0.1); $Li_aNiG_bO_2$ (0.90≤a≤1.8 and 0.001≤b≤0.1); $Li_aCoG_bO_2$ (0.90≤a≤1.8 and 0.001≤b≤0.1); $Li_aMn_{1-b}G_bO_2$ (0.90≤a≤1.8 and 0.001≤b≤0.1); $Li_aMn_2G_bO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); or $Li_aFePO_4$ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, an amount of the positive electrode active material may be about 90 wt% to about 99.5 wt% based on 100 wt% of the positive electrode active material layer. In an embodiment, amounts of the binder and the conductive material may be about 0.5 wt% to about 5 wt%, respectively, based on 100 wt% of the positive electrode active material layer.

The binder may attach the positive electrode active material particles well to each other and also attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer, such as a polyphenylene derivative; or a mixture thereof.

In an embodiment, Al may be used as the current collector, but the present disclosure is not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes.

Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

**Separator**

Depending on a type of the rechargeable lithium battery, a separator may be present between the positive electrode and the negative electrode. The separator may include any of polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any selected from a polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into cylindrical, prismatic, pouch-type, or coin-type batteries, and the like depending on a shape thereof.

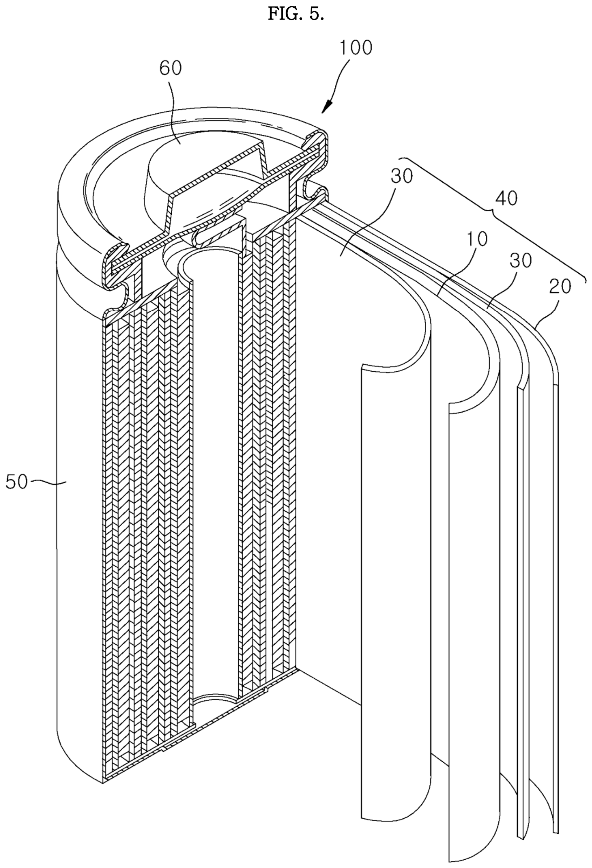

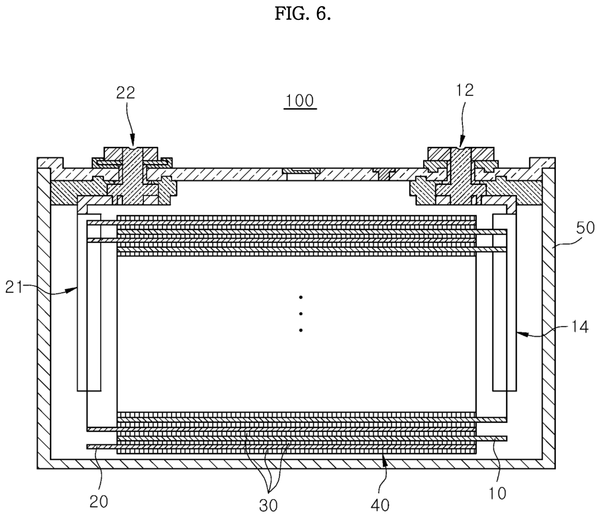

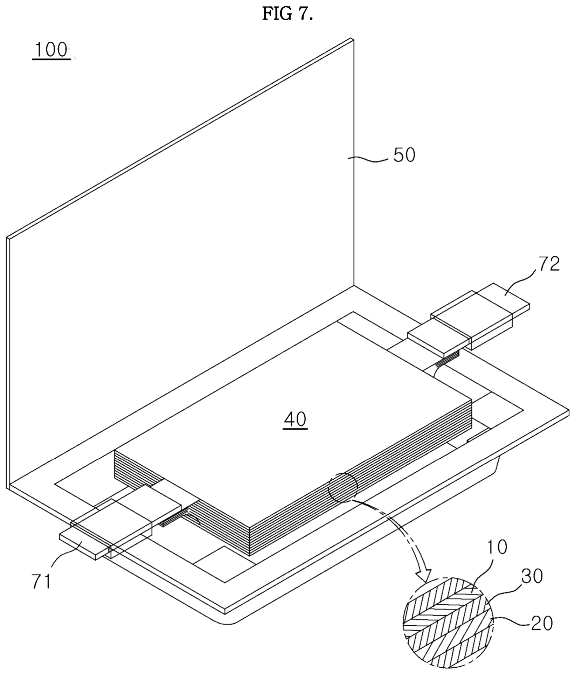

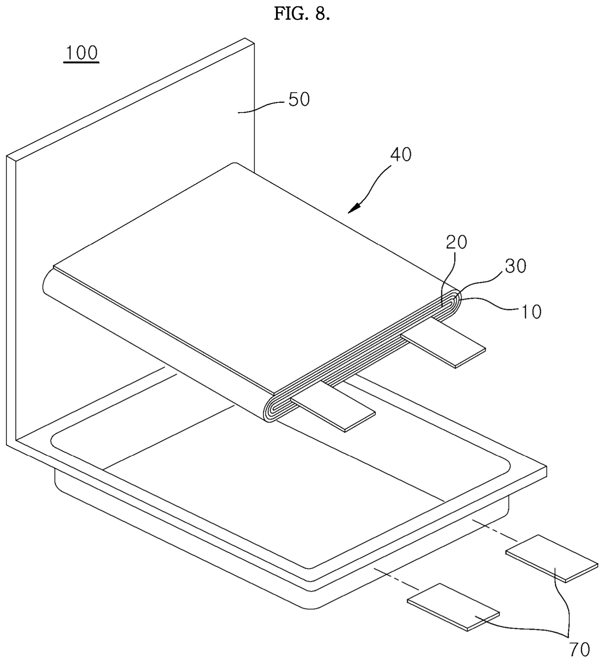

FIGS. 5 to 8 are schematic views illustrating a rechargeable lithium battery according to some embodiments. FIG. 5 shows a cylindrical battery; FIG. 6 shows a prismatic battery; and FIGS. 7 and 8 show pouch-type batteries. Referring to FIGS. 5 to 8, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 5. As shown in FIG. 6, the rechargeable lithium battery 100 may include a positive lead tab 14, a positive terminal 12, a negative lead tab 21, and a negative terminal 22. As shown in FIGS. 7 and 8, the rechargeable lithium battery 100 may include an electrode tab 70, which may be, for example, a positive electrode tab 71 and a negative electrode tab 72 functioning as an electrical path for inducing the current formed in the electrode assembly 40 to the outside.

The rechargeable lithium battery according to an embodiment may be applied to automobiles, mobile phones, and/or various types of electric devices, as non-limiting examples.

An electronic device or an electronic vehicle may contain the rechargeable lithium battery.

Herein, examples and comparative examples of the present invention will be described. However, it is to be understood that the following examples are provided as examples of the present invention, and are not intended to limit the present invention.

**Example 1**

**(1) Preparation of first negative electrode active material**

A flaky natural graphite raw material having an average particle diameter D50 of 120 $\mu$m was ground into primary particles having a plate-like shape and a major axis length of 30 $\mu$m using an air jet milling method. The primary particles were assembled into spherical secondary particles having an average particle diameter D50 of 7 $\mu$m using a spheroidizing device. Pitch carbon was added to the secondary particles, mixed, and then heat-treated in a sintering furnace at 3,000°C for 2 hours to prepare a first negative electrode active material. The pitch carbon was added so that the natural graphite/amorphous carbon weight ratio in the first negative electrode active material was 90:10.

**(2) Second negative electrode active material**

Artificial graphite (spherical, average particle diameter D50: 15 $\mu$m, pellet density: 1.5 g/cc, tap density: 0.9 g/cc, BET specific surface area: 1.5 m$^2$/g, and orientation degree: 100) was used as the second negative electrode active material. The artificial graphite is a secondary particle into which primary particles are assembled.

**(3) Preparation of negative electrode active material (i) in third negative electrode active material**

Silicon nanoparticles (aspect ratio: 5, and average particle size: approximately 100 nm) and petroleum pitch (amorphous carbon) were mixed in an isopropyl alcohol solvent at a weight ratio of 70:30, and dispersed using a homogenizer to prepare a dispersion. The prepared dispersion was sprayed at 120°C using a spray dryer. The resulting spray-dried product (precursor) was pressurized to 50 MPa using a powder pressure, and then heat-treated at 1,000°C in a furnace under a N$_2$ atmosphere to manufacture a reaction product that includes a core including amorphous carbon and silicon nanoparticles and a coating layer formed on a surface of the core and including amorphous carbon. The resulting reaction product was ground and classified using a 325 mesh to prepare a third negative electrode active material (C-1).
The prepared third negative electrode active material had a total pore volume of pores with a size of 200 nm or less of 2.95 x 10$^{-2}$ cm$^3$/g, an interparticle distance between silicon nanoparticles of 65 nm, and an average particle diameter D50 of 8.3 $\mu$m. The interparticle distance between the silicon nanoparticles was measured by analyzing the cross-section of silicon nanoparticles using TEM and calculating the distances between the centers of the silicon nanoparticles. The pore volume was measured by putting the silicon nanoparticles into a pore measurement device (device name: ASAP series, manufacturer: Micromeritics Instrument Corp), heating the silicon nanoparticles to 623 K at 10 K/min, and pretreating the silicon nanoparticles for 2 to 10 hours (vacuum pressure: 100 mmHg or less), and then measuring the pore volume in liquid nitrogen with a relative pressure (P/P$_o$) controlled to 0.01 or less. Specifically, measurement was carried out by nitrogen adsorption at 32 points from a relative pressure of 0.01 to 0.995, and then by nitrogen desorption at 24 points to a relative pressure of 0.14. Here, BET calculations can generally be made to the point at which the relative pressure (P/P$_o$) is 0.1.
(4) 47% by weight of the first negative electrode active material, 47% by weight of the second negative electrode active material, and 6% by weight of the third negative electrode active material were mixed to prepare a mixture of negative electrode active materials.
98.5% by weight of the prepared mixture of negative electrode active materials and 1.5% by weight polytetrafluoroethylene (PTFE) (D-1) as a binder were put into a blender without a solvent, and mixed at 10,000 rpm for 1 minute to obtain a mixture. The obtained mixture was put into a kneader, and kneaded at 110°C and a speed of 60 rpm for 5 minutes to obtain a mixture mass. Thereafter, the mixture mass was put into a blender, and ground at 10,000 rpm for 40 seconds to obtain an electrode powder. Then, the electrode powder was repeatedly pressed using a calender roll (roll diameter: 200 mm, and roll temperature: 80°C) to obtain an active material layer (thickness: 150 $\mu$m).
The active material layer was laminated on a copper current collector and rolled to manufacture a dry negative electrode plate.
A half-cell was manufactured using the dry negative electrode, a lithium metal counter electrode, and an electrolyte. The electrolyte is a mixed solvent (3:7 volume ratio) of ethylene carbonate and dimethyl carbonate in which 1 M LiPF$_6$ is dissolved.

**Example 2**

A first negative electrode active material was prepared in the same manner as in Example 1, except that the spheroidization conditions in Example 1 were changed. A negative electrode and a half-cell were manufactured in the same manner as in Example 1 using the prepared first negative electrode active material.

**Example 3**

A first negative electrode active material was prepared in the same manner as in Example 1, except that the spheroidization conditions in Example 1 were changed. A negative electrode and a half-cell were manufactured in the same manner as in Example 1 using the prepared first negative electrode active material.

**Examples 4 to 6**

Negative electrode plates and half-cells were manufactured in the same manner as in Example 1, except that the weight ratio of each of the components in Example 1 was changed as shown in Table 1 below.

**Comparative Example 1**

A first negative electrode active material was prepared in the same manner as in Example 1, except that pitch carbon was not added when the first negative electrode active material was prepared in Example 1. A negative electrode and a half-cell were manufactured in the same manner as in Example 1 using the prepared first negative electrode active material.

**Comparative Example 2**

A flaky natural graphite raw material having an average particle diameter D50 of 120 $\mu$m or more was ground into fine primary particles having an average particle diameter D50 of 120 $\mu$m using an air jet milling method. The primary particles were assembled into secondary particles having an average particle diameter of 20 $\mu$m using a spheroidizing device. Pitch carbon was added to the secondary particles, mixed, and then heat-treated at 1,200°C in a sintering furnace for 2 hours to prepare a first negative electrode active material. The pitch carbon was added so that the natural graphite/amorphous carbon weight ratio in the first negative electrode active material was 90:10.
A negative electrode and a half-cell were manufactured in the same manner as in Example 1 using the prepared first negative electrode active material.

**Comparative Example 3**

A flaky natural graphite raw material having an average particle diameter D50 of 80 $\mu$m was ground into primary particles with a major axis length of 7 $\mu$m using an air jet milling method. The primary particles were assembled into spherical secondary particles having an average particle diameter D50 of 15.6 $\mu$m using a spheroidizing device. Pitch carbon was added to the secondary particles, mixed, and then heat-treated at 1,200°C in a sintering furnace for 2 hours to prepare a first negative electrode active material. The pitch carbon was added so that the natural graphite/amorphous carbon weight ratio in the negative electrode active material was 90:10.
A negative electrode and a half-cell were manufactured in the same manner as in Example 1 using the prepared first negative electrode active material.

**Comparative Example 4**

A negative electrode plate and a half-cell were manufactured in the same manner as in Example 1, except that silicon oxide (a third negative electrode active material C-2) was used instead of the third negative electrode active material in Example 1.

**Comparative Example 5**

A dry negative electrode plate and a half-cell were manufactured in the same manner as in Example 1, except that 1.5% by weight of styrene butadiene rubber (D-2) was used instead of polytetrafluoroethylene (PTFE) as the binder in Example 1.

**(Experimental Example 1): Evaluation of first negative electrode active material Pellet density (units: g/cc)**

The pellet density was measured using a CARVER 4350.L pellet density meter. The pellet density is the density of the powder measured by putting 1.0 g of the first negative electrode active material of each of the Examples and Comparative Examples into a mold and maintaining the first negative electrode active material at a pressure of 2.0 tons for 30 seconds.

**Orientation degree:**

The orientation degree was measured using PANalytical's X'Pert Pro as an XRD analysis device. For each of the first negative electrode active materials of the Examples and Comparative Examples, the ratio of the diffraction peak intensity I(002) of the (002) plane to the diffraction peak intensity I(110) of the (110) plane measured by an X-ray diffraction analysis method using Cu$\alpha$ rays was calculated.

**d002 (units: Å)**

The d002 was measured using PANalytical's X'Pert Pro as an XRD analysis device. For each of the first negative electrode active materials of the Examples and Comparative Examples, the interplanar spacing of the (002) plane was measured by an X-ray diffraction analysis method using Cuα rays.

**Sphericity:**

The sphericity was measured using Malvern Morphologi 4 as a sphericity analyzer. For each of the first negative electrode active materials of the Examples and Comparative Examples, the A and B values in Equation 1 were calculated, and the sphericity was then calculated according to Equation 1.

**Mercury cumulative pore volume (units: mL/g)**

For each of the first negative electrode active materials of the Examples and Comparative Examples, the mercury cumulative pore volume was measured using a Hg Intrusion porosimeter (Micromeritics, AutoPore V, Mercury intrusion porosimetry). The negative electrode active material was placed in a special sample cup, and surrounded by mercury, and a pressure ranging from 0.2 to 60,000 psi was applied to force mercury into the negative electrode active material. Thereafter, the mercury porosity was measured by measuring a change in volume of the mercury reduced in a capillary stem reservoir. The pore size that can be measured in this way is in a range from 0.01 μm to 100 μm. In the negative electrode active material, pores having a size of 0.01 μm to 5 μm are generally determined as pores in the active material.

**(Experimental Example 2) Evaluation of battery characteristics**

The manufactured half-cells were charged and discharged at 0.1C to measure their charge and discharge capacities. The measured discharge capacities are shown in Table 1 below. Also, the Coulombic efficiency (discharge capacity/charge capacity x 100%) was measured.

The manufactured half-cells were subjected to one cycle of 0.2C constant current (CC)/constant voltage (CV) charging and 0.2C discharging, one cycle of 0.5C CC charging and 0.2C discharging, one cycle of 1C CC charging and 0.2C discharging, and one cycle of 2C CC charging and 0.2C discharging, and then charging characteristics were calculated. At this time, the charging conditions were a 10 mV cutoff for the CC phase and a 15-hour cutoff for the CV phase, and the discharge conditions were a 1.5V cutoff. The charging characteristics were measured at each C-rate. The charging characteristic results were expressed by calculating the ratio of the 2C CC charge capacity to the 0.2C CC charge capacity.

**Energy density (units: Wh/L):**

$$\text{(Cell capacity (Ah) x Cell average voltage (V))/Cell volume (L)}$$

The energy density is a value obtained by dividing the product of the discharge capacity calculated by discharging at a C-rate of 0.1C to 1C in the operating voltage range of a battery cell and the average voltage of the corresponding cell by the volume of the cell.

**Boost charging time (units: seconds):**

The boost charging time refers to the time taken to charge from 8 to 80% SOC through constant current charging, and the boost charging time was evaluated by identifying a charging pattern that does not reach the upper voltage limit of 4.2 V during charging.

**Boost charging lifespan (units: cycles):**

Once the boost charging time was determined, a large cell was evaluated for one cycle, with charging to 8 to 80% of SOC and discharging at a discharge voltage of 2.8 V and a constant current of 0.33 C, until the SOH reached 80%.

Table 1

| | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| First negative electrode active material | major axis length of Primary particles (μm) | 30 | 30 | 30 | 30 | 30 | 30 | 30 | 120 | 7 | 30 | 30 |
| | Secondary particles D50 (μm) | 7 | 10 | 5 | 7 | 7 | 7 | 7 | 20 | 15.6 | 7 | 7 |
| | Pellet density | 1.75 | 1.80 | 1.60 | 1.75 | 1.75 | 1.75 | 1.9 | 1.8 | 1.78 | 1.75 | 1.75 |
| | Orientation degree | 60 | 80 | 55 | 60 | 60 | 60 | 70 | 110 | 120 | 60 | 60 |
| | d002(Å) | 3.3569 | 3.3567 | 3.3573 | 3.3569 | 3.3569 | 3.3569 | 3.3558 | 3.3559 | 3.3561 | 3.3569 | 3.3569 |
| | Sphericity | 0.95 | 0.95 | 0.90 | 0.95 | 0.95 | 0.95 | 0.95 | 0.95 | 0.95 | 0.95 | 0.95 |
| | Mercury cumulative pore volume (<1 um, mL/g) | 0.035 | 0.041 | 0.037 | 0.035 | 0.035 | 0.035 | 0.158 | 0.065 | 0.066 | 0.035 | 0.035 |
| Third negative electrode active material | | C-1 | C-1 | C-1 | C-1 | C-1 | C-1 | C-1 | C-1 | C-1 | C-2 | C-1 |
| Binder | | D-1 | D-1 | D-1 | D-1 | D-1 | D-1 | D-1 | D-1 | D-1 | D-1 | D-2 |
| Weight ratio | | 47:47:6 | 47:47:6 | 47:47:6 | 70.5:23.5:6 | 23.5:70.5:6 | 48:48:4 | 47:47:6 | 47:47:6 | 47:47:6 | 47:47:6 | 47:47:6 |
| Energy density | | 750 | 750 | 740 | 755 | 745 | 730 | 765 | 760 | 755 | 740 | 750 |
| Boost charging time | | 900 | 1080 | 840 | 900 | 1080 | 1200 | 1500 | 1380 | 1200 | 1320 | 1200 |
| Boost charging lifespan | | 1500 | 1400 | 1500 | 1400 | 1500 | 1600 | 1000 | 1200 | 1300 | 1300 | 1250 |

*Weight ratio: first negative electrode active material : second negative electrode active material : third negative electrode active material

The boost charging effect is evaluated in conjunction with the boost charging time and boost charging lifespan.

As shown in Table 1 above, the negative electrode active materials for a rechargeable lithium battery of the Examples provide high energy density, and have a short boost time and a long boost charging lifespan, thereby sufficiently providing a boost charging effect.

However, as shown in Table 1 above, the negative electrode active materials of the Comparative Examples do not satisfy the composition of the present invention, and it can be seen that the boost charging effect is significantly lower than those of the Examples because these negative electrode active materials have a long boost charging time and a short boost charging lifespan.

## Example 7

### (1) Preparation of first negative electrode active material

A flaky natural graphite raw material having an average particle diameter D50 of 120 $\mu$m was ground into primary particles having a plate-like shape and a major axis length of 20 to 30 $\mu$m using an air jet milling method. The primary particles were assembled into spherical secondary particles having an average particle diameter D50 of 7 $\mu$m using a spheroidizing device. Pitch carbon was added to the secondary particles, mixed, and then heat-treated at 3,000°C in a sintering furnace for 2 hours to prepare a first negative electrode active material. The pitch carbon was added so that the natural graphite/amorphous carbon weight ratio in the negative electrode active material was 90:10.

(2) Artificial graphite (spherical, average particle diameter D50: 15 $\mu$m, pellet density: 1.5 g/cc, tap density: 0.9 g/cc, BET specific surface area: 1.5 m$^2$/g, and orientation degree: 100) was used as the second negative electrode active material. The artificial graphite is a secondary particle into which primary particles are assembled.

(3) Artificial graphite having an average particle diameter D50 of 3 to 5 $\mu$m and an aspect ratio of 4 to 10, silicon nanoparticles having an average particle diameter D50 of 100 nm, and petroleum pitch as amorphous carbon were mixed in a weight ratio of 20:40:40, and dispersed in an isopropyl solvent, and then dispersed using a homogenizer to prepare a dispersion. The dispersion was spray-dried at 120°C using a spray dryer. The resulting spray-dried product was heat-treated at 1,000°C in a furnace under a nitrogen atmosphere to form a silicon-carbon composite core of artificial graphite and silicon particles and an amorphous carbon layer formed on the surface of the core. The resulting product was ground and classified through a 400 mesh to prepare (ii) a negative electrode active material (C-1) in the third negative electrode active material having a silicon-carbon composite core of artificial graphite and silicon particles and an amorphous carbon coating layer formed on the surface of the core.

The third negative electrode active material includes a composite core of silicon and artificial graphite and an amorphous carbon shell formed on a surface of the core. The silicon particle:artificial graphite weight ratio in the third negative electrode active material was 5:5, the thickness of the amorphous carbon coating layer was 30 nm, and the aspect ratio of the third negative electrode active material was 1 to 2.5. The third negative electrode active material contained 20% by weight artificial graphite, 40% by weight silicon particles, and 40% by weight amorphous carbon.

(4) A mixture of negative electrode active materials was prepared by mixing 47 parts by weight of the first negative electrode active material, 47 parts by weight of the second negative electrode active material, and 6 parts by weight of the third negative electrode active material based on 100 parts by weight of the mixture of negative electrode active materials.

98.5% by weight of the prepared mixture of negative electrode active materials and 1.5% by weight of polytetrafluoroethylene (PTFE) as a binder was put into a blender without a solvent, and mixed at 10,000 rpm for 1 minute to obtain a mixture. The obtained mixture was put into a kneader, and kneaded at 110°C and a speed of 60 rpm for 5 minutes to obtain a mixture mass. Thereafter, the mixture mass was put into a blender, and ground at 10,000 rpm for 40 seconds to obtain an electrode powder. Then, the electrode powder was repeatedly pressed using a calender roll (roll diameter: 200 mm, and roll temperature: 80°C) to obtain a dry electrode plate (thickness: 150 $\mu$m).

The dry electrode plate was laminated on a copper current collector and rolled to manufacture a dry negative electrode.

A half-cell was manufactured using the dry negative electrode, a lithium metal counter electrode, and an electrolyte. The electrolyte is a mixed solvent (3:7 volume ratio) of ethylene carbonate and dimethyl carbonate in which 1 M LiPF$_4$ is dissolved.

## Example 8

A first negative electrode active material was prepared in the same manner as in Example 7, except that the spheroidization conditions in Example 7 were changed. A negative electrode and a half-cell were manufactured in the same manner as in Example 7 using the prepared first negative electrode active material.

**Example 9**

A first negative electrode active material was prepared in the same manner as in Example 7, except that the spheroidization conditions in Example 7 were changed. A negative electrode and a half-cell were manufactured in the same manner as in Example 7 using the prepared first negative electrode active material.

**Examples 10 and 11**

Negative electrode plates and half-cells were manufactured in the same manner as in Example 7, except that the weight ratio of each of the components was changed as shown in Table 2 below.

**Comparative Example 6**

A first negative electrode active material was prepared in the same manner as in Example 7, except that pitch carbon was not added when the first negative electrode active material was prepared in Example 7. A negative electrode and a half-cell were manufactured in the same manner as in Example 7 using the prepared first negative electrode active material.

**Comparative Example 7**

A flaky natural graphite raw material having an average particle diameter D50 of 120 $\mu$m or more was ground into fine primary particles having an average particle diameter D50 of 120 $\mu$m using an air jet milling method. The primary particles were assembled into secondary particles having an average particle diameter of 20 $\mu$m using a spheroidizing device. Pitch carbon was added to the secondary particles, mixed, and then heat-treated at 1,200°C in a sintering furnace for 2 hours to prepare a negative electrode active material. The pitch carbon was added so that the natural graphite/amorphous carbon weight ratio in the first negative electrode active material was 90:10.
A negative electrode and a half-cell were manufactured in the same manner as in Example 7 using the prepared first negative electrode active material.

**Comparative Example 8**

A negative electrode plate and a half-cell were manufactured in the same manner as in Example 7, except that silicon oxide (C-2) was used instead of the third negative electrode active material in Example 7.

**(Experimental Example 3): Evaluation of first negative electrode active material**

The pellet density (units: g/cc); the orientation: d002 (units: Å); and the sphericity: cumulative pore volume of mercury (units: mL/g) were measured in the same manner as in Experimental Example 1.

**(Experimental Example 4) Evaluation of battery characteristics Capacity (units: mAh/g) and charge C-rate (units: %)**

The manufactured half-cells were charged and discharged at 0.1C to measure charge and discharge capacities. The measured discharge capacities are shown in Table 1 below. Also, the Coulombic efficiency (discharge capacity/-charge capacity x 100%) was measured.
The manufactured half-cells were subjected to one cycle of 0.2C constant current (CC)/constant voltage (CV) charging and 0.2C discharge, one cycle of 0.5C CC charging and 0.2C discharge, one cycle of 1C CC charging and 0.2C discharge, and one cycle of 2C CC charging and 0.2C discharge, and then charging characteristics were calculated. Here, the charging conditions were a 10 mV cutoff for the CC phase and a 15-hour cutoff for the CV phase, and the discharge conditions were a 1.5V cutoff. The charging characteristics were measured at each C-rate. The charging characteristic results were expressed by calculating the ratio of the 2C CC charge capacity to the 0.2C CC charge capacity.

**Direct current internal resistance (DC-IR, units: $\Omega$)**

The half-cells manufactured according to the Examples and Comparative Examples were subjected to one charge/discharge cycle under the following conditions: charging with constant current/constant voltage (CC/CV) at 0.2C, with 10 mV and 0.01C as the cut-off conditions; resting for 10 minutes; discharging with constant current (CC) at 0.2C, with 1.5V as the cut-off condition; and resting for 10 minutes. Thereafter, the voltage drop (V) that occurs while allowing a current of 3C to flow for 1 second at SOC50 (which refers to a state in which the battery is charged to 50% of its capacity when the total charge capacity of the battery is 100%, which means that the battery is discharged to 50% when viewed as a discharging state) was measured. The resistance value was calculated from the measured voltage and the applied current (3C), and the result was expressed as direct current internal resistance (DC-IR).

**Rion (units: Ω):**

A symmetric cell was fabricated using the manufactured negative electrode plate to measure EIS, from which Rion can be calculated using a Nyquist plot.

**Energy density (units: Wh/L):**

$$\text{(Cell capacity (Ah) x Cell average voltage (V))/Cell volume (L)}$$

The energy density is a value obtained by dividing the product of the discharge capacity calculated by discharging at a C-rate of 0.1C to 1C in the operating voltage range of a battery cell and the average voltage of the corresponding cell by the volume of the cell.

**Boost charging time (units: seconds):**

The boost charging time refers to the time taken to charge from 8 to 80% SOC through constant current charging, and the boost charging time was evaluated by identifying a charging pattern that does not reach the upper voltage limit of 4.2 V during charging.

**Boost charging lifespan (units: cycle):**

Once the boost charging time was determined, a large cell was evaluated for one cycle, with charging to 8 to 80% of SOC and discharging at a discharge voltage of 2.8 V and a constant current of 0.33 C, until the SOH reached 80%.

Table 2

| | | Examples | | | | | Comparative Examples | | |
|---|---|---|---|---|---|---|---|---|---|
| | | 7 | 8 | 9 | 10 | 11 | 6 | 7 | 8 |
| First negativ e electro de active materi al | Major axis length of primary particles | 30 | 30 | 30 | 30 | 30 | 30 | 120 | 30 |
| | D50 of secondary particles | 7 | 10 | 5 | 7 | 7 | 7 | 20 | 7 |
| | Pellet density | 1.75 | 1.80 | 1.60 | 1.75 | 1.75 | 1.9 | 1.8 | 1.75 |
| | Orientation degree | 60 | 80 | 55 | 60 | 60 | 70 | 110 | 60 |
| | d002 | 3.356 9 | 3.356 7 | 3.357 3 | 3.356 9 | 3.3569 | 3.355 8 | 3.356 1 | 3.3569 |
| | Sphericity | 0.95 | 0.95 | 0.90 | 0.95 | 0.95 | 0.95 | 0.95 | 0.95 |
| | Mercury cumulative pore volume | 0.035 | 0.041 | 0.037 | 0.035 | 0.035 | 0.158 | 0.065 | 0.035 |
| Third negative electrode active material | | C-1 | C-1 | C-1 | C-1 | C-1 | C-1 | C-1 | C-2 |
| Binder | | D-1 | D-1 | D-1 | D-1 | D-1 | D-1 | D-1 | D-1 |
| Weight ratio | | 47:47 :6 | 47:47 :6 | 47:47 :6 | 70.5: 23.5: 6 | 23.5:70 .5:6 | 47:47 :6 | 47:47 :6 | 47:47:6 |
| Capacity | | 435 | 437 | 433 | 440 | 430 | 437 | 445 | 438 |
| C-rate characteristics | | 45 | 40 | 50 | 47.5 | 42.5 | 32 | 38 | 42 |
| DCIR | | 6.3 | 6.6 | 5.8 | 6.1 | 6.5 | 7.5 | 7.2 | 6.6 |
| Rion | | 21 | 24 | 18 | 19 | 23 | 30 | 28 | 23 |
| Energy density | | 780 | 785 | 760 | 785 | 780 | 785 | 790 | 740 |
| Boost charging time | | 720 | 900 | 600 | 720 | 720 | 1,800 | 1,320 | 1,200 |
| Boost charging lifespan | | 1,300 | 1,100 | 1,600 | 1,150 | 1,200 | 1,250 | 800 | 1,050 |

*In Table 2,
C-1: silicon-carbon composite
C-2: silicon oxide
D-1: PTFE
Weight ratio: first negative electrode active material : second negative electrode active material : third negative electrode active material based on 100 parts by weight of negative electrode active material

As shown in Table 2 above, the dry negative electrode plates for a rechargeable lithium battery of the Examples may provide a boost charging effect because the dry negative electrode plates have a short boost charging time and a long boost charging lifespan, and may increase the reliability of the battery effect because the dry negative electrode plates exhibit a long lifespan and a high energy density effect.

However, as shown in Table 2 above, the dry negative electrode plates of Comparative Examples 6 and 7, which do not include the first negative electrode active material of the present invention, cannot provide a boost charging effect because the dry negative electrode plates have a long boost charging time or a short boost charging lifespan. Also, the dry negative electrode plate of Comparative Example 8, which does not include the third negative electrode active material of the present invention, had low energy density.

## Example 12

### (1) Preparation of first negative electrode active material

A flaky natural graphite raw material having an average particle diameter D50 of 120 $\mu$m was ground into primary particles having a plate-like shape and a major axis length of 30 $\mu$m using an air jet milling method. The primary particles were assembled into spherical secondary particles having an average particle diameter D50 of 7 $\mu$m using a spheroidizing device. Pitch carbon was added to the secondary particles, mixed, and then heat-treated at 3,000°C in a sintering furnace for 2 hours to prepare a negative electrode active material. The pitch carbon was added so that the natural graphite/amorphous carbon weight ratio in the negative electrode active material was 90:10.

### (2) Second negative electrode active material

Artificial graphite (spherical, average particle diameter D50: 15 $\mu$m, pellet density: 1.5 g/cc, tap density: 0.9 g/cc, BET specific surface area: 1.5 $m^2$/g, and orientation degree: 100) was used as the second negative electrode active material. The artificial graphite is a secondary particle into which primary particles are assembled.

### (3) Preparation of (iii) a negative electrode active material of the third negative electrode active material

Silicon particles having an average particle size of 8 $\mu$m were ball-milled to manufacture primary particles having an average particle size D50 of 100 nm. The primary particles were mixed with stearic acid in a weight ratio of 20:80, and the resulting mixture was spray-dried to produce secondary particles having an average particle size D50 of 7 $\mu$m and including pores.

The produced secondary particles and petroleum pitch were mixed in a weight ratio of 60:40, and the resulting mixture was subjected to a compression molding process using a cold isostatic pressing method at a pressure of 10 MPa. Subsequently, the resulting compression-molded product was carbonized at a temperature of 1,000°C under $N_2$ atmosphere conditions.

Next, the carbonized product was subjected to a classification process using a sieve so that the span value of Equation 2 above reached 1.1 so as to prepare a third negative electrode active material, which is a silicon-carbon composite having secondary particles having an average particle diameter (D50) of 7 $\mu$m, into which silicon primary particles coated with 30 nm-thick soft carbon and having an average particle diameter (D50) of 100 nm were assembled, and a soft carbon coating layer coating the secondary particles. At this time, the content of the silicon nanoparticles was 60% by weight, and the content of the soft carbon was 40% by weight based on the total weight of the third negative electrode active material. Also, the D10, D50, and D90 of the negative electrode active material were measured using a particle analyzer (trade name: LS 13 320, and manufacturer: Beckman Coulter), and the span value of Equation 2 above was calculated.

Also, the sphericity was calculated from the cross-sectional image measured by CP-SEM using the Image J program, and a sphericity of 0.98 was obtained. In addition, the total pore volume and mesopore volume of the manufactured third negative electrode active material were measured using a Barrett-Joyner-Halenda (BJH) analysis device.

The BJH measurement was performed using a BJH (model name: ASAP 2020, and manufacturer: Micromeritics) analysis device by measuring an adsorption/desorption amount of the negative electrode active material adsorbed on the sample according to the pressure change while changing the pressure from 0 mHg to 950 mmHg using nitrogen gas at a temperature of liquid nitrogen (-198°C).

The prepared third negative electrode active material had a sphericity of 0.98, a mesopore volume/total pore volume ratio of 68%, a specific surface area of 0.8 $m^2$/g, a BJH total pore volume of 0.007 cm3/g, a D10 of 4.7 $\mu$m, a D50 of 8.2 $\mu$m, and a D90 of 13.7 $\mu$m.

(4) A mixture of negative electrode active materials was prepared by mixing 47 parts by weight of the first negative electrode active material, 47 parts by weight of the second negative electrode active material, and 6 parts by weight of the third negative electrode active material based on 100 parts by weight of the mixture of negative electrode active materials.

98.5% by weight of the prepared mixture of negative electrode active materials and 1.5% by weight of polytetrafluoroethylene (PTFE) (D-1) as a binder were put into a blender without a solvent, and mixed at 10,000 rpm for 1 minute to obtain a mixture. The obtained mixture was put into a kneader, and kneaded at 110°C and a speed of 60 rpm for 5 minutes to obtain a mixture mass. Thereafter, the mixture mass was put into a blender, and ground at 10,000 rpm for 40 seconds to obtain an electrode powder. Then, the electrode powder was repeatedly pressed using a calender roll (roll diameter: 200 mm, and roll temperature: 80°C) to obtain a dry electrode plate (thickness: 150 $\mu$m).

The dry electrode plate was laminated on a copper current collector, and rolled to manufacture a dry negative electrode.

A half-cell was manufactured using the dry negative electrode, a lithium metal counter electrode, and an electrolyte. The electrolyte is a mixed solvent (3:7 volume ratio) of ethylene carbonate and dimethyl carbonate in which 1 M LiPF$_4$ is dissolved.

**Example 13**

A first negative electrode active material was prepared in the same manner as in Example 12, except that the spheroidization conditions in Example 7 were changed. A dry negative electrode and a half-cell were manufactured in the same manner as in Example 12 using the prepared first negative electrode active material.

**Examples 14 and 15**

Negative electrode plates and half-cells were manufactured in the same manner as in Example 12, except that the weight ratio of each of the components in Example 12 was changed as shown in Table 3 below.

**Comparative Example 9**

A flaky natural graphite raw material having an average particle diameter D50 of 120 $\mu$m or more was ground into fine primary particles having an average particle diameter D50 of 120 $\mu$m using an air jet milling method. The primary particles were assembled into secondary particles having an average particle diameter of 20 $\mu$m using a spheroidizing device. Pitch carbon was added to the secondary particles, mixed, and then heat-treated at 1,200°C in a sintering furnace for 2 hours to prepare a negative electrode active material. The pitch carbon was added so that the natural graphite/amorphous carbon weight ratio in the negative electrode active material was 90:10.

A negative electrode and a half-cell were manufactured in the same manner as in Example 12 using the prepared first negative electrode active material.

**Comparative Example 10**

A flaky natural graphite raw material having an average particle diameter D50 of 80 $\mu$m was ground into primary particles having a major axis length of 7 $\mu$m using an air jet milling method. The primary particles were assembled into spherical secondary particles having an average particle diameter D50 of 15.6 $\mu$m using a spheroidizing device. Pitch carbon was added to the secondary particles, mixed, and then heat-treated at 1,200°C in a sintering furnace for 2 hours to prepare a first negative electrode active material. The pitch carbon was added so that the natural graphite/amorphous carbon weight ratio in the negative electrode active material was 90:10.

A negative electrode and a half-cell were manufactured in the same manner as in Example 12 using the prepared first negative electrode active material.

**Comparative Example 11**

A negative electrode plate and a half-cell were manufactured in the same manner as in Example 12, except that silicon oxide (C-2) was used instead of the third negative electrode active material in Example 12.

**(Experimental Example 5): Evaluation of first negative electrode active material**

The pellet density (units: g/cc); the orientation: d002 (units: Å); and the sphericity: cumulative pore volume of mercury (units: mL/g) were measured in the same manner as in Experimental Example 1.

**(Experimental Example 6) Evaluation of battery characteristics Capacity (units: mAh/g) and charge C-rate (units: %)**

The manufactured half-cells were charged and discharged at 0.1C to measure charge and discharge capacities. The measured discharge capacities are shown in Table 1 below. Also, the Coulombic efficiency (discharge capacity/charge capacity x 100%) was measured.

The manufactured half-cells were subjected to one cycle of 0.2C constant current (CC)/constant voltage (CV) charging and 0.2C discharge, one cycle of 0.5C CC charging and 0.2C discharge, one cycle of 1C CC charging and 0.2C discharge, and one cycle of 2C CC charging and 0.2C discharge, and then charging characteristics were calculated. Here, the charging conditions were a 10 mV cutoff for the CC phase and a 15-hour cutoff for the CV phase, and the discharge conditions were a 1.5V cutoff. The charging characteristics were measured at each C-rate. The charging characteristic results were expressed by calculating the ratio of the 2C CC charge capacity to the 0.2C CC charge capacity.

**Energy density (units: Wh/L):**

$$\text{(Cell capacity (Ah)} \times \text{Cell average voltage (V))/Cell volume (L)}$$

The energy density is a value obtained by dividing the product of the discharge capacity calculated by discharging at a C-rate of 0.1C to 1C in the operating voltage range of a battery cell and the average voltage of the corresponding cell by the volume of the cell.

**Efficiency (units: %)**

The efficiency was calculated by the same method as for the capacity and charge C-rate characteristics. The efficiency was calculated as first cycle discharge capacity /first cycle charge capacity* 100 (Mars discharging * 100/Mars charging)."

**Boost charging time (units: seconds):**

The boost charging time refers to the time taken to charge up from 8 to 80% SOC through constant current charging, and the boost charging time was evaluated by identifying a charging pattern that does not reach the upper voltage limit of 4.2 V during charging.

**Boost charging lifespan (units: cycle):**

Once the boost charging time was determined, a large cell was evaluated for one cycle, with charging to 8 to 80% of SOC and discharging at a discharge voltage of 2.8 V and a constant current of 0.33 C, until the SOH reached 80%.

**Expansion rate (units: %)**

The expansion rate was measured by a thickness monitoring system (TMS) method.

The thicknesses of the cells manufactured according to the Examples and Comparative Examples were evaluated in real time while charging/discharging (0.5C/0.5C) at 45°C under the conditions of a charge voltage of 4.35 V and a discharge voltage of 2.8 V so as to evaluate the increase in thickness after 50 cycles compared to the thickness after 1 cycle.

Expansion rate = (Cell thickness after 50 cycles - Cell thickness after 1 cycle)/Cell thickness after 1 cycle * 100

Table 3

| | | Examples | | | | Comparative Examples | | |
|---|---|---|---|---|---|---|---|---|
| | | 12 | 13 | 14 | 15 | 9 | 10 | 11 |
| First ne- gativ e electro de active material | Major axis length of pri- mary parti- cles | 30 | 30 | 30 | 30 | 120 | 7 | 30 |
| | D50 of secondary particles | 7 | 10 | 7 | 7 | 20 | 15.6 | 7 |
| | Pellet den- sity | 1.75 | 1.80 | 1.75 | 1.75 | 1.8 | 1.78 | 1.75 |
| | Orientation degree | 60 | 80 | 60 | 60 | 110 | 120 | 60 |
| | d002 | 3.356 9 | 3.356 7 | 3.3569 | 3.3569 | 3.356 9 | 3.356 1 | 3.356 9 |
| | Sphericity | 0.95 | 0.95 | 0.95 | 0.95 | 0.95 | 0.95 | 0.95 |
| | Mercury cumulative pore volume | 0.035 | 0.041 | 0.035 | 0.035 | 0.065 | 0.066 | 0.035 |
| Third negative electrode active material | | C-1 | C-1 | C-1 | C-1 | C-1 | C-1 | C-2 |
| Weight ratio | | 47:47: 6 | 47:47: 6 | 70.5:23.5 :6 | 23.5:70.5 :6 | 47:47: 6 | 47:47: 6 | 47:47: 6 |
| Capacity | | 435 | 437 | 440 | 430 | 435 | 433 | 438 |
| Charge C-rate | | 47 | 42 | 49.5 | 45.5 | 41 | 42 | 42 |
| Energy density | | 760 | 765 | 765 | 760 | 760 | 750 | 740 |
| Boost charging time | | 900 | 1200 | 780 | 1020 | 1380 | 1320 | 1320 |
| Boost charging lifespan | | 1500 | 1100 | 1600 | 1300 | 750 | 1150 | 800 |
| Efficiency | | 91 | 90 | 91 | 90 | 89 | 90 | 87 |
| Expansion rate | | 5 | 6 | 3 | 6 | 8 | 6 | 10 |

*In Table 3,
C-1: silicon-carbon composite
C-2: silicon oxide
Weight ratio: first negative electrode active material : second negative electrode active material : third negative electrode active material based on 100 parts by weight of negative electrode active material

As shown in Table 3 above, it can be seen that the dry negative electrode plates for a rechargeable lithium battery of the Examples had high energy density, a high charge C-rate, high efficiency, a short boost charging time, a long boost charging lifespan, and a low expansion rate. Therefore, the electrode plates of the examples provided (e.g., simultaneously provided) high energy density, a long lifespan, boost charging effects, and improved expansion characteristics.

On the other hand, the electrode plates of Comparative Examples 9 and 10, which did not include the first negative electrode active material of the present invention, had a short boost charging lifespan and low energy density and a low charge C-rate. Comparative Example 11, which did not include the third negative electrode active material of the present invention, had low energy density and a high expansion rate.

The dry negative electrode plate for a rechargeable lithium battery according to embodiments can provide high energy density, a boost charging effect, a long lifespan, and improved expansion characteristics, and thus exhibit excellent rechargeable lithium battery performance.

Although some embodiments of the present invention have been described above, the present invention is not limited thereto. Therefore, it is to be understood that various changes and modifications can be made within the scope of the claims, the detailed description of the present invention, and the accompanying drawings, which also fall within the scope of the present invention.

**Claims**

1. A dry negative electrode plate for a rechargeable lithium battery, comprising a negative electrode active material and a binder,

   wherein the negative electrode active material comprises a mixture of a first negative electrode active material, a second negative electrode active material, and a third negative electrode active material,
   wherein the first negative electrode active material comprises natural graphite comprising secondary particles into which primary particles are arranged and a coating layer surrounding the secondary particles and comprising amorphous carbon, and the first negative electrode active material has an orientation degree of 90 or less, and the first negative electrode active material has a d002 of 3.356 Å to 3.360 Å,
   wherein the second negative electrode active material comprises graphite,
   wherein the third negative electrode active material comprises one or more of the following:

   (i) a negative electrode active material comprising a core comprising silicon nanoparticles and amorphous carbon; and an amorphous carbon coating layer surrounding the core and comprising amorphous carbon,
   (ii) a negative electrode active material comprising a composite of silicon and crystalline carbon; and an amorphous carbon coating layer located on a surface of the composite and comprising amorphous carbon, and
   (iii) a negative electrode active material comprising silicon nanoparticles and an amorphous carbon coating layer located on surfaces of the silicon nanoparticles and having a sphericity of 0.9 to 1.0; and

   wherein the binder comprises polytetrafluoroethylene, polyvinylidene fluoride, a polyolefin, or a mixture thereof.

2. The dry negative electrode plate as claimed in claim 1,

   wherein the first negative electrode active material has a mercury (Hg) cumulative pore volume of 0.01 to 0.06 mL/g; and/or
   wherein the first negative electrode active material has a pellet density of 1.60 to 1.80 g/cc; and/or
   wherein the first negative electrode active material has a sphericity of 0.85 or greater; and/or
   wherein a ratio of a major axis length of the primary particles to an average particle diameter (D50) of the secondary particles is greater than 2 and less than or equal to 10; and/or
   wherein the primary particles have a plate-like shape, and the secondary particles have a spherical shape; and/or
   wherein the primary particles have a major axis length of 10 to 200 $\mu$m.

3. The dry negative electrode plate as claimed in any of the preceding claims,

   wherein the secondary particles have an average particle diameter (D50) of 30 $\mu$m or less; and/or
   wherein amorphous carbon is additionally present on surfaces of the primary particles; and/or
   wherein the amorphous carbon is a mixture of one or more of soft carbon, hard carbon, mesophase pitch carbide, and calcined coke.

4. The dry negative electrode plate as claimed in any of the preceding claims, wherein the natural graphite and the amorphous carbon are included in a weight ratio of 90:10 to 75:25 based on a total of 100 parts by weight of the natural graphite and the amorphous carbon in the first negative electrode active material.

5. The dry negative electrode plate as claimed in any of the preceding claims, wherein the second negative electrode active material comprises artificial graphite having a D50 of 10 $\mu$m to 20 $\mu$m, a pellet density of 1.1 to 1.6 g/cc, a specific surface area of 10 m$^2$/g or less, and an orientation degree of 90 or greater.

6. The dry negative electrode plate as claimed in any of the preceding claims,

   wherein the interparticle distance between the silicon nanoparticles included in the core of the negative electrode active material (i) is 100 nm or less; and/or
   wherein the average particle diameter (D50) of the silicon nanoparticles in the negative electrode active material (i) is in a range from 50 nm to 150 nm; and/or
wherein the negative electrode active material (i) has a total pore volume of pores with a size of 200 nm or less of $3.0 \times 10^{-2}$ cm$^3$/g or less; and/or
wherein the silicon nanoparticles and the amorphous carbon are included in a weight ratio of 80:20 to 20:80 based on a total of 100 parts by weight of the silicon nanoparticles and the amorphous carbon in the negative electrode active material (i).

7. The dry negative electrode plate as claimed in any of the preceding claims, wherein the negative electrode active material (ii) has an aspect ratio of 1 to 2.5.

8. The dry negative electrode plate as claimed in any of the preceding claims, wherein the silicon, the crystalline carbon, and the amorphous carbon in the negative electrode active material (ii) are included in amounts of 20 to 70% by weight, 3 to 50% by weight, and 20 to 50% by weight, respectively.

9. The dry negative electrode plate as claimed in any of the preceding claims,

wherein the negative electrode active material (iii) includes pores, and the pores comprise mesopores; and/or
wherein the negative electrode active material (iii) has a ratio of mesopore volume to a total pore volume of the negative electrode active material (iii) ((mesopore volume/total pore volume) x 100) of 30% or more and less than 70%.

10. The dry negative electrode plate as claimed in any of the preceding claims, wherein the negative electrode active material (iii) has a span value of 1.1 to 1.6 according to the following Equation 2:

$$\text{Equation 2}$$

$$\text{Span} = (D90-D10)/D50,$$

wherein

D10 represents a particle size of negative electrode active material particles (iii) having a cumulative volume of 10% by volume in the particle size distribution,
D50 represents a particle size of negative electrode active material particles (iii) having a cumulative volume of 50% by volume in the particle size distribution, and
D90 represents a particle size of negative electrode active material particles (iii) having a cumulative volume of 90% by volume in the particle size distribution.

11. The dry negative electrode plate as claimed in any of the preceding claims, wherein the silicon nanoparticles and the amorphous carbon coating layer have contents of 55 to 64% by weight and 36 to 45% by weight, respectively, based on a total of 100% by weight of the negative electrode active material (iii).

12. The dry negative electrode plate as claimed in any of the preceding claims, wherein the negative electrode active material (iii) further comprises a polymer layer on the amorphous carbon coating layer.

13. The dry negative electrode plate as claimed in claim 12, wherein the polymer layer comprises polyvinyl alcohol and polyacrylic acid.

14. The dry negative electrode plate as claimed in any of the preceding claims, wherein the first negative electrode active material, the second negative electrode active material, and the third negative electrode active material in the mixture are included in amounts of 20 to 75% by weight, 20 to 75% by weight, and 1 to 15% by weight, respectively.

15. A rechargeable lithium battery comprising:

the dry negative electrode plate for a rechargeable lithium battery as claimed in any of the preceding claims; and
a positive electrode.

FIG. 1.

FIG. 2.

FIG. 3.

FIG 4.

FIG. 5.

FIG. 6.

FIG 7.

FIG. 8.

## EUROPEAN SEARCH REPORT

Application Number

EP 25 21 9369

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 228 025 A1 (SAMSUNG SDI CO LTD [KR]) 16 August 2023 (2023-08-16) | 1-4,6-8, 10 | INV. |
| Y | * paragraph [0024] - paragraph [0028] * | 5,9, | H01M4/36 |
|  | * paragraph [0033] - paragraph [0042] * | 11-15 | H01M4/134 |
|  | * paragraph [0046] - paragraph [0055] * |  | H01M4/38 |
|  | * paragraph [0058] - paragraph [0060] * |  | H01M4/587 |
|  | * paragraph [0089] - paragraph [0095] * |  | H01M4/62 |
|  | ----- |  | H01M4/133 |
| Y | EP 4 266 397 A1 (SAMSUNG SDI CO LTD [KR]) 25 October 2023 (2023-10-25) | 5 |  |
| A | * paragraph [0019] - paragraph [0051] * | 1-4,6-15 |  |
|  | ----- |  |  |
| Y | JP 2013 222551 A (SUMITOMO BAKELITE CO) 28 October 2013 (2013-10-28) | 9 |  |
|  | * page 5, column 4 - page 6, column 3 * |  |  |
|  | ----- |  |  |
| Y | US 2021/143411 A1 (LEE DAE-HYEOK [KR] ET AL) 13 May 2021 (2021-05-13) | 11-15 |  |
| A | * paragraph [0101] - paragraph [0105] * | 1-10 |  |
|  | ----- |  |  |
| A | US 2019/355971 A1 (KIM YOUNG-MIN [KR]) 21 November 2019 (2019-11-21) | 1-15 | TECHNICAL FIELDS SEARCHED (IPC) |
|  | * the whole document * |  | H01M |
|  | ----- |  |  |
| A | EP 4 451 364 A1 (SAMSUNG SDI CO LTD [KR]) 23 October 2024 (2024-10-23) | 1-15 |  |
|  | * the whole document * |  |  |
|  | ----- |  |  |
| A | US 2021/391570 A1 (HAN JUN HEE [KR] ET AL) 16 December 2021 (2021-12-16) | 1-15 |  |
|  | * the whole document * |  |  |
|  | ----- |  |  |

The present search report has been drawn up for all claims

| Place of search | Date of completion of the search | Examiner |
|---|---|---|
| The Hague | 23 April 2026 | Iglesias van M., H |

EPO FORM 1503 03.82 (P4C01)

## ANNEX TO THE EUROPEAN SEARCH REPORT
## ON EUROPEAN PATENT APPLICATION NO.

EP 25 21 9369

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2026

| Patent document cited in search report | | Publication date | Patent family member(s) | | Publication date |
|---|---|---|---|---|---|
| EP 4228025 | A1 | 16-08-2023 | EP | 4228025 A1 | 16-08-2023 |
| | | | KR | 20230119523 A | 16-08-2023 |
| | | | US | 2023253553 A1 | 10-08-2023 |
| EP 4266397 | A1 | 25-10-2023 | EP | 4266397 A1 | 25-10-2023 |
| | | | JP | 2024515948 A | 11-04-2024 |
| | | | KR | 20230030409 A | 06-03-2023 |
| | | | US | 2024120461 A1 | 11-04-2024 |
| | | | US | 20260074187 A1 | 12-03-2026 |
| | | | WO | 2023027431 A1 | 02-03-2023 |
| JP 2013222551 | A | 28-10-2013 | NONE | | |
| US 2021143411 | A1 | 13-05-2021 | KR | 20210055506 A | 17-05-2021 |
| | | | US | 2021143411 A1 | 13-05-2021 |
| | | | US | 2024332512 A1 | 03-10-2024 |
| US 2019355971 | A1 | 21-11-2019 | CN | 110504420 A | 26-11-2019 |
| | | | KR | 20190132026 A | 27-11-2019 |
| | | | US | 2019355971 A1 | 21-11-2019 |
| | | | US | 2024097102 A1 | 21-03-2024 |
| | | | US | 2025105256 A1 | 27-03-2025 |
| EP 4451364 | A1 | 23-10-2024 | CN | 118825214 A | 22-10-2024 |
| | | | EP | 4451364 A1 | 23-10-2024 |
| | | | KR | 20240153838 A | 24-10-2024 |
| | | | US | 2024347704 A1 | 17-10-2024 |
| US 2021391570 | A1 | 16-12-2021 | CN | 113809283 A | 17-12-2021 |
| | | | KR | 20210155609 A | 23-12-2021 |
| | | | KR | 20260018138 A | 06-02-2026 |
| | | | US | 2021391570 A1 | 16-12-2021 |
| | | | US | 2025336957 A1 | 30-10-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175703
- KR 1020240175702

- KR 1020240175709